# EUROPEAN PATENT APPLICATION

(11) **EP 4 668 948 A1**
(43) Date of publication of application: **24.12.2025**
(21) Application number: 24756307.5
(22) Date of filing: 08.02.2024
(51) Int. Cl.: H04W 72/0446

(54) **DATA TRANSMISSION METHOD, DEVICE AND APPARATUS**

(30) Priority: 14.02.2023 CN 202310112780
(71) Applicant: Datang Mobile Communications Equipment Co., Ltd., Beijing 100085 (CN)
(72) Inventor: LUO, Chen, Beijing 100085 (CN); WANG, Jiaqing, Beijing 100085 (CN); LI, Yaomin, Beijing 100085 (CN)
(74) Representative: Studio Torta S.p.A.
(86) International application number: PCT/CN2024/076982
(87) International publication number: WO 2024/169935

(57) **Abstract**

Disclosed in embodiments of the present disclosure are a data transmission method, device and apparatus. The method comprises: acquiring a data transmission unit (DTU), the DTU being a time domain resource granularity of single transmission of one data transmission block; on the basis of the DTU and N transmission opportunities in one CG period, determining a target DTU set for transmitting data, at least one DTU in the target DTU set being located in one CG period; and transmitting data on the basis of the target DTU set, the data comprising at least one data transmission block.

## Description

### CROSS-REFERENCES TO RELATED APPLICATIONS

The present application claims priority to Chinese patent application No. 202310112780.8 filed on February 14, 2023, entitled "Data Transmission Method, Device and Apparatus", which is hereby incorporated by reference in its entirety.

### FIELD

The present application relates to the field of communications, and in particular, to methods and apparatuses for data transmission and devices.

### BACKGROUND

Extended reality (XR) is the most important fifth generation (5G) media application. The XR includes augmented reality (AR), mixed reality (MR), virtual reality (VR), etc.

Currently, data of uplink (UL) XR services with periodicity may be transmitted through an UL configured grant (CG) transmission method. In the UL CG transmission method, only one fixed transmission occasion and one fixed transmission resource are configured for data transmission in each CG period. For XR services with variable data packet sizes (i.e., UL XR services having non-periodicity), based on the configuration of one fixed transmission occasion, data transmission cannot be completed within this CG period, resulting in additional data transmission delay.

### BRIEF SUMMARY

Embodiments of the present application provide methods and apparatuses for data transmission and devices, to solve a defect of additional data transmission delay in the related art and avoid increasing of the additional data transmission delay.

An embodiment of the present application provides a method for data transmission, performed by a terminal device, including:
obtaining a data transmission unit (DTU), where the DTU is time domain resource granularity for a single transmission of one data transmission block;
determining, based on the DTU and N transmission occasions within one configured grant (CG) period, a target DTU set for transmitting data, where at least one DTU among the target DTU set is located within one CG period, and N is an integer greater than or equal to 1; and
transmitting the data based on the target DTU set, where the data includes at least one data transmission block.

In some embodiments, the DTU includes one or more of:
N1 transmission occasions; or
M symbols within N2 transmission occasions,
where N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

In some embodiments, the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

In some embodiments, obtaining the DTU includes:
receiving the DTU sent from a network device; and/or
determining the DTU based on a first criterion.

In some embodiments, the method further includes:
receiving transmission occasion configuration information corresponding to a CG period sent from a network device, and determining the N transmission occasions based on the transmission occasion configuration information.

In some embodiments, the transmission occasion configuration information includes one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

In some embodiments, determining, based on the DTU and the N transmission occasions within one CG period, the target DTU set for transmitting the data further includes:
obtaining a transmission parameter set of the DTU; and
determining the target DTU set based on the transmission parameter set of the DTU, the DTU, and the N transmission occasions.

In some embodiments, determining the target DTU set based on the transmission parameter set of the DTU, the DTU, and the N transmission occasions includes:
starting from a first specified position and according to the DTU, determining, based on the N transmission occasions, a candidate DTU set; and
determining the target DTU set based on the transmission parameter set of the DTU and the candidate DTU set.

In some embodiments, the first specified position is determined based on one or more of:
an indication through a downlink signaling sent from a network device or a configuration through a network device;
an agreement of a protocol;
a time gap associated with a service characteristic; or
a time position determined by the terminal device.

In some embodiments, the target DTU set is a subset or a full set of the candidate DTU set,
where in case that the target DTU set is the subset of the candidate DTU set, the candidate DTU set includes the target DTU set.

In some embodiments, obtaining the transmission parameter set of the DTU includes:
receiving a transmission parameter set of the DTU sent from a network device; and/or
determining a transmission parameter set of the DTU based on a second criterion.

In some embodiments, obtaining the transmission parameter set of the DTU includes:
receiving at least one piece of transmission parameter set configuration information sent from a network device; and determining the transmission parameter set of the DTU based on the at least one piece of transmission parameter set configuration information; and/or
determining the transmission parameter set of the DTU based on a third criterion,
where the at least one piece of transmission parameter set configuration information includes one or more of:
   at least one transmission parameter set of each DTU among the target DTU set;
   at least one transmission parameter set of each DTU within a specified duration; or
   at least one transmission parameter set of each specified DTU.

In some embodiments, the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

In some embodiments, the first criterion, the second criterion or the third criterion is any of:
a criterion configured or indicated through the network device;
a criterion agreed by a protocol;
information associated with a preset service characteristic;
channel state information; or
a criterion for implementation of the terminal device.

In some embodiments, the transmission parameter set further includes a common transmission parameter set and/or a dedicated transmission parameter set,
where the common transmission parameter set includes a common transmission parameter set of all DTUs within the one CG period; and
the dedicated transmission parameter set includes one or more of:
   a dedicated transmission parameter set of a DTU within a first duration within the one CG period; or
   a dedicated transmission parameter set of a second DTU within the one CG period.

In some embodiments, the N transmission occasions are one or more of:
N adjacent uplink slots;
N adjacent uplink symbol sets;
N uplink slots within a specified duration;
N uplink symbol sets within a specified slot;
N uplink slots at a specified slot position; or
N uplink symbol sets at a specified symbol position.

In some embodiments, the N transmission occasions satisfy one or more of:
the N transmission occasions are located at a same symbol position in N slots;
the N transmission occasions occupy a same number of symbols in N slots;
symbol positions of different transmission occasions among the N transmission occasions are independent of each other, and/or each transmission occasion among the N transmission occasions does not cross a slot;
symbol positions of different transmission occasions among the N transmission occasions are independent of each other, and/or at least one transmission occasion among the N transmission occasions crosses a slot;
different transmission occasions among the N transmission occasions have a preset gap within a same slot, where the preset gap is greater than or equal to 0 symbol; or
slots where different transmission occasions among the N transmission occasions are located have a preset gap, where the preset gap is greater than or equal to 0 slot.

In some embodiments, the method further includes:
sending an uplink signaling to a network device, where the uplink signaling includes information associated with the target DTU set.

In some embodiments, the uplink signaling is one or more of:
an uplink physical layer signaling;
a media access control (MAC) layer signaling; or
a radio resource control (RRC) layer signaling.

In some embodiments, the uplink physical layer signaling is configured grant uplink control information (CG-UCI) or uplink control information (UCI).

An embodiment of the present application further provides a method for data transmission, performed by a network device, including:
sending a data transmission unit (DTU) to a terminal device, where the DTU is time domain resource granularity for a single transmission of one data transmission block; and
receiving data transmitted from the terminal device based on a target DTU set, where the data includes at least one data transmission block,
where the target DTU set is determined based on the DTU and N transmission occasions within one configured grant (CG) period, at least one DTU among the target DTU set is located within one CG period, and N is an integer greater than or equal to 1.

In some embodiments, the DTU includes one or more of:
N1 transmission occasions; or
M symbols within N2 transmission occasions,
where N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

In some embodiments, the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

In some embodiments, the method further includes:
sending transmission occasion configuration information corresponding to a CG period to the terminal device.

In some embodiments, the transmission occasion configuration information includes one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

In some embodiments, the method further includes:
sending a transmission parameter set of the DTU to the terminal device.

In some embodiments, the transmission parameter set of the DTU includes a common transmission parameter set and/or a dedicated transmission parameter set,
where the common transmission parameter set is a common transmission parameter set of all DTUs within the one CG period; and
the dedicated transmission parameter set is one or more of:
   a dedicated transmission parameter set of a DTU within a specified duration within the one CG period; or
   a dedicated transmission parameter set of a specified DTU within the one CG period.

In some embodiments, the method further includes:
sending at least one piece of transmission parameter set configuration information to the terminal device.

In some embodiments, the at least one piece of transmission parameter set configuration information includes one or more of:
at least one transmission parameter set of each DTU among the target DTU set;
at least one transmission parameter set of each DTU within a specified duration; or
at least one transmission parameter set of each specified DTU.

In some embodiments, the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

In some embodiments, the method further includes:
receiving an uplink signaling sent from the terminal device, where the uplink signaling includes information associated with the target DTU set.

In some embodiments, the uplink signaling is one or more of:
an uplink physical layer signaling;
a media access control (MAC) layer signaling; or
a radio resource control (RRC) layer signaling.

In some embodiments, the uplink physical layer signaling is configured grant uplink control information (CG-UCI) or uplink control information (UCI).

In some embodiments, receiving the data transmitted from the terminal device based on the target DTU set includes:
receiving, based on the uplink signaling, at least one data transmission block included in the data transmitted from the terminal device based on the target DTU set.

An embodiment of the present application provides a terminal device, including: a memory, a transceiver and a processor,
where the memory is used for storing a computer program;
the transceiver is used for receiving and sending data under control of the processor; and
the processor is used for reading the computer program in the memory and performing the following operations:
   obtaining a data transmission unit (DTU), where the DTU is time domain resource granularity for a single transmission of one data transmission block;
   determining, based on the DTU and N transmission occasions within one configured grant (CG) period, a target DTU set for transmitting data, where at least one DTU among the target DTU set is located within one CG period, and N is an integer greater than or equal to 1; and
   transmitting the data based on the target DTU set, where the data includes at least one data transmission block.

In some embodiments, the DTU includes one or more of:
N1 transmission occasions; or
M symbols within N2 transmission occasions,
where N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

In some embodiments, the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

In some embodiments, obtaining the DTU includes:
receiving the DTU sent from a network device; and/or
determining the DTU based on a first criterion.

In some embodiments, the processor is further used for performing the following operation:
receiving transmission occasion configuration information corresponding to a CG period sent from a network device, and determining the N transmission occasions based on the transmission occasion configuration information.

In some embodiments, the transmission occasion configuration information includes one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

In some embodiments, the transmission occasion configuration information corresponding to the CG period may be configured through a higher layer signaling and/or activated/deactivated through a downlink signaling. In case that the transmission occasion configuration information corresponding to the CG period may be configured through a higher layer signaling, the terminal becomes valid immediately after receiving the configuration information, that is, the terminal performs transmission occasion acknowledge based on the transmission occasion configuration information. In case that the transmission occasion configuration information corresponding to the CG period may be configured through a higher layer signaling and activated through a downlink signaling, after the terminal receives the higher layer signaling, in case that a downlink signaling for activation is received, the corresponding transmission occasion becomes valid immediately. In case that a downlink signaling for deactivation is received, the corresponding transmission occasion becomes invalid immediately.

In some embodiments, determining, based on the DTU and the N transmission occasions within one CG period, the target DTU set for transmitting the data further includes:
obtaining a transmission parameter set of the DTU; and
determining the target DTU set based on the transmission parameter set of the DTU, the DTU, and the N transmission occasions.

In some embodiments, determining the target DTU set based on the transmission parameter set of the DTU, the DTU, and the N transmission occasions includes:
starting from a first specified position and according to the DTU, determining, based on the N transmission occasions, a candidate DTU set; and
determining the target DTU set based on the transmission parameter set of the DTU and the candidate DTU set.

In some embodiments, the first specified position is determined based on one or more of:
an indication through a downlink signaling sent from a network device or a configuration through a network device;
an agreement of a protocol;
a time gap associated with a service characteristic; or
a time position determined by the terminal device.

In some embodiments, the target DTU set is a subset or a full set of the candidate DTU set,
where in case that the target DTU set is the subset of the candidate DTU set, the candidate DTU set includes the target DTU set.

In some embodiments, obtaining the transmission parameter set of the DTU includes:
receiving a transmission parameter set of the DTU sent from a network device; and/or
determining a transmission parameter set of the DTU based on a second criterion.

In some embodiments, obtaining the transmission parameter set of the DTU includes:
receiving at least one piece of transmission parameter set configuration information sent from a network device; and determining the transmission parameter set of the DTU based on the at least one piece of transmission parameter set configuration information; and/or
determining the transmission parameter set of the DTU based on a third criterion,
where the at least one piece of transmission parameter set configuration information includes one or more of:
   at least one transmission parameter set of each DTU among the target DTU set;
   at least one transmission parameter set of each DTU within a specified duration; or
   at least one transmission parameter set of each specified DTU.

In some embodiments, the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

In some embodiments, the first criterion, the second criterion or the third criterion is any of:
a criterion configured or indicated through the network device;
a criterion agreed by a protocol;
information associated with a preset service characteristic;
channel state information; or
a criterion for implementation of the terminal device.

In some embodiments, the transmission parameter set further includes a common transmission parameter set and/or a dedicated transmission parameter set,
where the common transmission parameter set includes a common transmission parameter set of all DTUs within the one CG period; and
the dedicated transmission parameter set includes one or more of:
   a dedicated transmission parameter set of a DTU within a first duration within the one CG period; or
   a dedicated transmission parameter set of a second DTU within the one CG period.

In some embodiments, the N transmission occasions are one or more of:
N adjacent uplink slots;
N adjacent uplink symbol sets;
N uplink slots within a specified duration;
N uplink symbol sets within a specified slot;
N uplink slots at a specified slot position; or
N uplink symbol sets at a specified symbol position.

In some embodiments, the N transmission occasions satisfy one or more of:
the N transmission occasions are located at a same symbol position in N slots;
the N transmission occasions occupy a same number of symbols in N slots;
symbol positions of different transmission occasions among the N transmission occasions are independent of each other, and/or each transmission occasion among the N transmission occasions does not cross a slot;
symbol positions of different transmission occasions among the N transmission occasions are independent of each other, and/or at least one transmission occasion among the N transmission occasions crosses a slot;
different transmission occasions among the N transmission occasions have a preset gap within a same slot, where the preset gap is greater than or equal to 0 symbol; or
slots where different transmission occasions among the N transmission occasions are located have a preset gap, where the preset gap is greater than or equal to 0 slot.

In some embodiments, the processor is further used for performing the following operation:
sending an uplink signaling to a network device, where the uplink signaling includes information associated with the target DTU set.

In some embodiments, the uplink signaling is one or more of:
an uplink physical layer signaling;
a media access control (MAC) layer signaling; or
a radio resource control (RRC) layer signaling.

In some embodiments, the uplink physical layer signaling is configured grant uplink control information (CG-UCI) or uplink control information (UCI).

An embodiment of the present application provides a network device, including: a memory, a transceiver, and a processor,
where the memory is used for storing a computer program;
the transceiver is used for receiving and sending data under control of the processor; and
the processor is used for reading the computer program in the memory and performing the following operations:
   sending a data transmission unit (DTU) to a terminal device, where the DTU is time domain resource granularity for a single transmission of one data transmission block; and
   receiving data transmitted from the terminal device based on a target DTU set, where the data includes at least one data transmission block,
   where the target DTU set is determined based on the DTU and N transmission occasions within one configured grant (CG) period, at least one DTU among the target DTU set is located within one CG period, and N is an integer greater than or equal to 1.

In some embodiments, the DTU includes one or more of:
N1 transmission occasions; or
M symbols within N2 transmission occasions,
where N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

In some embodiments, the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

In some embodiments, the processor is further used for performing the following operation:
sending transmission occasion configuration information corresponding to a CG period to the terminal device.

In some embodiments, the transmission occasion configuration information includes one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

In some embodiments, the processor is further used for performing the following operation:
sending a transmission parameter set of the DTU to the terminal device.

In some embodiments, the transmission parameter set of the DTU includes a common transmission parameter set and/or a dedicated transmission parameter set,
where the common transmission parameter set is a common transmission parameter set of all DTUs within the one CG period; and
the dedicated transmission parameter set is one or more of:
   a dedicated transmission parameter set of a DTU within a specified duration within the one CG period; or
   a dedicated transmission parameter set of a specified DTU within the one CG period.

In some embodiments, the processor is further used for performing the following operation:
sending at least one piece of transmission parameter set configuration information to the terminal device.

In some embodiments, the at least one piece of transmission parameter set configuration information includes one or more of:
at least one transmission parameter set of each DTU among the target DTU set;
at least one transmission parameter set of each DTU within a specified duration; or
at least one transmission parameter set of each specified DTU.

In some embodiments, the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

In some embodiments, the processor is further used for performing the following operation:
receiving an uplink signaling sent from the terminal device, where the uplink signaling includes information associated with the target DTU set.

In some embodiments, the uplink signaling is one or more of:
an uplink physical layer signaling;
a media access control (MAC) layer signaling; or
a radio resource control (RRC) layer signaling.

In some embodiments, the uplink physical layer signaling is configured grant uplink control information (CG-UCI) or uplink control information (UCI).

In some embodiments, receiving the data transmitted from the terminal device based on the target DTU set includes:
receiving, based on the uplink signaling, the data transmitted from the terminal device based on the target DTU set.

The present application further provides an apparatus for data transmission, for use in a terminal device, including:
an obtaining unit, used for obtaining a data transmission unit (DTU), where the DTU is time domain resource granularity for a single transmission of one data transmission block;
a determining unit, used for determining, based on the DTU and N transmission occasions within one configured grant (CG) period, a target DTU set for transmitting data, where at least one DTU among the target DTU set is located within one CG period, and N is an integer greater than or equal to 1; and
a transmitting unit, used for transmitting the data based on the target DTU set, where the data includes at least one data transmission block.

In some embodiments, the DTU includes one or more of:
N1 transmission occasions; or
M symbols within N2 transmission occasions,
where N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

In some embodiments, the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

In some embodiments, the obtaining unit is used for:
receiving the DTU sent from a network device; and/or
determining the DTU based on a first criterion.

In some embodiments, the obtaining unit is used for receiving transmission occasion configuration information corresponding to a CG period sent from a network device; and
the determining unit is further used for determining the N transmission occasions based on the transmission occasion configuration information.

In some embodiments, the transmission occasion configuration information includes one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

In some embodiments, the determining unit is used for:
obtaining a transmission parameter set of the DTU; and
determining the target DTU set based on the transmission parameter set of the DTU, the DTU, and the N transmission occasions.

In some embodiments, the determining unit is used for:
starting from a first specified position and according to the DTU, determining, based on the N transmission occasions, a candidate DTU set; and
determining the target DTU set based on the transmission parameter set of the DTU and the candidate DTU set.

In some embodiments, the first specified position is determined based on one or more of:
an indication through a downlink signaling sent from a network device or a configuration through a network device;
an agreement of a protocol;
a time gap associated with a service characteristic; or
a time position determined by the terminal device.

In some embodiments, the target DTU set is a subset or a full set of the candidate DTU set,
where in case that the target DTU set is the subset of the candidate DTU set, the candidate DTU set includes the target DTU set.

In some embodiments, the obtaining unit is used for:
receiving a transmission parameter set of the DTU sent from a network device; and/or
determining a transmission parameter set of the DTU based on a second criterion.

In some embodiments, the obtaining unit is used for:
receiving at least one piece of transmission parameter set configuration information sent from a network device; and determining the transmission parameter set of the DTU based on the at least one piece of transmission parameter set configuration information; and/or
determining the transmission parameter set of the DTU based on a third criterion,
where the at least one piece of transmission parameter set configuration information includes one or more of:
   at least one transmission parameter set of each DTU among the target DTU set;
   at least one transmission parameter set of each DTU within a specified duration; or
   at least one transmission parameter set of each specified DTU.

In some embodiments, the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

In some embodiments, the first criterion, the second criterion or the third criterion is any of:
a criterion configured or indicated through the network device;
a criterion agreed by a protocol;
information associated with a preset service characteristic;
channel state information; or
a criterion for implementation of the terminal device.

In some embodiments, the transmission parameter set further includes a common transmission parameter set and/or a dedicated transmission parameter set,
where the common transmission parameter set includes a common transmission parameter set of all DTUs within the one CG period; and
the dedicated transmission parameter set includes one or more of:
   a dedicated transmission parameter set of a DTU within a first duration within the one CG period; or
   a dedicated transmission parameter set of a second DTU within the one CG period.

In some embodiments, the N transmission occasions are one or more of:
N adjacent uplink slots;
N adjacent uplink symbol sets;
N uplink slots within a specified duration;
N uplink symbol sets within a specified slot;
N uplink slots at a specified slot position; or
N uplink symbol sets at a specified symbol position.

In some embodiments, the N transmission occasions satisfy one or more of:
the N transmission occasions are located at a same symbol position in N slots;
the N transmission occasions occupy a same number of symbols in N slots;
symbol positions of different transmission occasions among the N transmission occasions are independent of each other, and/or each transmission occasion among the N transmission occasions does not cross a slot;
symbol positions of different transmission occasions among the N transmission occasions are independent of each other, and/or at least one transmission occasion among the N transmission occasions crosses a slot;
different transmission occasions among the N transmission occasions have a preset gap within a same slot, where the preset gap is greater than or equal to 0 symbol; or
slots where different transmission occasions among the N transmission occasions are located have a preset gap, where the preset gap is greater than or equal to 0 slot.

In some embodiments, the apparatus further includes a sending unit,
where the sending unit is used for sending an uplink signaling to a network device, where the uplink signaling includes information associated with the target DTU set.

In some embodiments, the uplink signaling is one or more of:
an uplink physical layer signaling;
a media access control (MAC) layer signaling; or
a radio resource control (RRC) layer signaling.

In some embodiments, the uplink physical layer signaling is configured grant uplink control information (CG-UCI) or uplink control information (UCI).

An embodiment of the present application provides an apparatus for data transmission, for use in a network device, including:
a sending unit, used for sending a data transmission unit (DTU) to a terminal device, where the DTU is time domain resource granularity for a single transmission of one data transmission block; and
a receiving unit, used for receiving data transmitted from the terminal device based on a target DTU set, where the data includes at least one data transmission block,
where the target DTU set is determined based on the DTU and N transmission occasions within one configured grant (CG) period, at least one DTU among the target DTU set is located within one CG period, and N is an integer greater than or equal to 1.

In some embodiments, the DTU includes one or more of:
N1 transmission occasions; or
M symbols within N2 transmission occasions,
where N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

In some embodiments, the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

In some embodiments, the sending unit is further used for:
sending transmission occasion configuration information corresponding to a CG period to the terminal device.

In some embodiments, the transmission occasion configuration information includes one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

In some embodiments, the sending unit is further used for:
sending a transmission parameter set of the DTU to the terminal device.

In some embodiments, the transmission parameter set of the DTU includes a common transmission parameter set and/or a dedicated transmission parameter set,
where the common transmission parameter set is a common transmission parameter set of all DTUs within the one CG period; and
the dedicated transmission parameter set is one or more of:
   a dedicated transmission parameter set of a DTU within a specified duration within the one CG period; or
   a dedicated transmission parameter set of a specified DTU within the one CG period.

In some embodiments, the sending unit is further used for:
sending at least one piece of transmission parameter set configuration information to the terminal device.

In some embodiments, the at least one piece of transmission parameter set configuration information includes one or more of:
at least one transmission parameter set of each DTU among the target DTU set;
at least one transmission parameter set of each DTU within a specified duration; or
at least one transmission parameter set of each specified DTU.

In some embodiments, the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

In some embodiments, the receiving unit is further used for:
receiving an uplink signaling sent from the terminal device, where the uplink signaling includes information associated with the target DTU set.

In some embodiments, the uplink signaling is one or more of:
an uplink physical layer signaling;
a media access control (MAC) layer signaling; or
a radio resource control (RRC) layer signaling.

In some embodiments, the uplink physical layer signaling is configured grant uplink control information (CG-UCI) or uplink control information (UCI).

In some embodiments, the receiving unit is used for:
receiving, based on the uplink signaling, the data transmitted from the terminal device based on the target DTU set.

An embodiment of the present application further provides a processor-readable storage medium, where the processor-readable storage medium stores a computer program, and the computer program is used to cause a processor to perform any of the method for data transmission performed by the terminal device or performed from the network device.

Embodiments of the present application provide methods and apparatuses for data transmission, and devices. The method includes: obtaining a DTU, where the DTU is time domain resource granularity for a single transmission of one data transmission block; determining, based on the DTU and N transmission occasions within one CG period, a target DTU set for transmitting data, where at least one DTU among the target DTU set is located within one CG period, and N is an integer greater than or equal to 1; and transmitting the data based on the target DTU set, where the data includes at least one data transmission block. In the embodiments of the present application, the target DTU set includes at least one DTU, where at least one DTU is located within one CG period, and N is an integer greater than or equal to 1. The terminal device can transmit at least one data transmission block included in the data through each DTU among the target DTU set, thereby increasing transmission time for data transmission, ensuring that data transmission is completed within a CG period, and avoiding additional data transmission delays.

### BRIEF DESCRIPTION OF THE DRAWINGS

In order to illustrate solutions disclosed in the embodiments of the present application or the related art more clearly, drawings used in the description of the embodiments or the related art are briefly described below. The drawings in the following description are only some embodiments of the present application, and other drawings may be obtained according to these drawings without any creative work for those skilled in the art.
FIG. 1 is a first schematic flowchart of a method for data transmission according to an embodiment of the present application;
FIG. 2 is a schematic diagram of division for a symbol set according to an embodiment of the present application;
FIG. 3 is a second schematic flowchart of a method for data transmission according to an embodiment of the present application;
FIG. 4 is a first schematic diagram of N transmission occasions configured by a network device according to an embodiment of the present application;
FIG. 5 is a second schematic diagram of N transmission occasions configured by a network device according to an embodiment of the present application;
FIG. 6 is a third schematic diagram of N transmission occasions configured by a network device according to an embodiment of the present application;
FIG. 7 is a fourth schematic diagram of N transmission occasions configured by a network device according to an embodiment of the present application;
FIG. 8 is a schematic diagram of a relationship between a transmission parameter set and a data transmission unit (DTU) according to an embodiment of the present application;
FIG. 9 is a schematic structural diagram of a terminal device according to an embodiment of the present application;
FIG. 10 is a schematic structural diagram of a network device according to an embodiment of the present application;
FIG. 11 is a first schematic structural diagram of an apparatus for data transmission according to an embodiment of the present application; and
FIG. 12 is a second schematic structural diagram of an apparatus for data transmission according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

The term "multiple" in embodiments of the present application refers to two or more than two, and other quantifiers are similar thereto.

The solutions provided by the embodiments of the present application may be applied to a variety of systems, especially 5th generation mobile communication technology (5G) systems. For example, the applicable systems may include a global system of mobile communication (GSM) system, a code division multiple access (CDMA) system, a wideband code division multiple access (WCDMA), a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These systems all include a terminal device and a network device. The system may further include a core network part, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of the terminal device may also be different. For example, in a 5G system, the terminal device may be called a user equipment (UE). A wireless terminal device may communicate with one or more core networks (CNs) via a radio access network (RAN). A wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a radio access network. For example, they may include devices such as personal communication service (PCS) phones, cordless phones, session initiated protocol (SIP) phones, wireless local loop (WLL) stations, personal digital assistants (PDAs), etc. The wireless terminal device may also be referred to as a system, a subscriber unit, a subscriber station, a mobile station, a mobile, a remote station, an access point, a remote terminal, an access terminal, a user terminal, a user agent, or a user device, which is not limited in the embodiments of the present application.

The network device involved in the embodiments of the present application may be a base station. The base station may include multiple cells that provide services to a terminal. Depending on the specific application scenario, the base station may also be referred to as an access point, or may be a device in an access network that communicates with a wireless terminal device through one or more sectors on an air interface, or other names. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present application may be a base transceiver station (BTS) in the global system for mobile communications (GSM) or code division multiple access (CDMA), or a network device (node B) in wide-band code division multiple access (WCDMA), or an evolutional network device (eNB or e-NodeB) in the long term evolution (LTE) system, a 5G base station (gNB) in the 5G network architecture (next generation system), or a home evolved node B (HeNB), a relay node, a home base station (femto), a pico base station (pico), etc., which is not limited in the embodiments of the present application. In some network structures, the network device may include a centralized unit (CU) node and a distributed unit (DU) node, and the centralized unit and the distributed unit may also be arranged geographically separately.

Network devices and terminals may each use one or more antennas for multi-input multi-output (MIMO) transmission. The MIMO transmission may be single user MIMO (SU-MIMO) or multi user MIMO (MU-MIMO). Depending on the form and the quantity of antenna combinations, MIMO transmission may be 2D-MIMO, 3D-MIMO, FD-MIMO or massive-MIMO, or may be diversity transmission, precoding transmission or beamforming transmission, etc.

In the related art, for extended reality (XR) services with variable data packet sizes (i.e., uplink (UL) XR services with periodicity), based on configuring one fixed transmission occasion, data transmission cannot be completed within a configured grant (CG) period, resulting in additional data transmission waiting delay.

Therefore, in the present application, multiple transmission occasions are added within one CG period to support problems for an XR service of variable data packet size and arrival time having delay jitter, so as to avoid adding additional data transmission delay.

Solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of skill in the art based on the embodiments of the present application without any creative work belong to the scope of the present application.

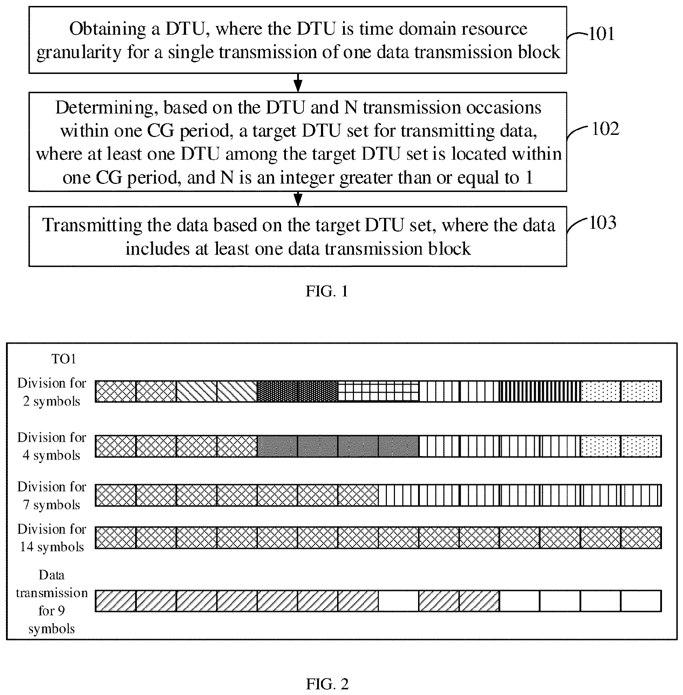

FIG. 1 is a first schematic flowchart of a method for data transmission according to an embodiment of the present application. The method described in the embodiment of FIG. 1 is performed by a terminal device or an apparatus for data transmission provided at the terminal device, and the apparatus for data transmission may be implemented by a combination of software and/or hardware. As shown in FIG. 1, the method includes the following steps.

Step 101: obtaining a data transmission unit (DTU), where the DTU is time domain resource granularity for a single transmission of one data transmission block.

Step 102: determining, based on the DTU and N transmission occasions within one configured grant (CG) period, a target DTU set for transmitting data, where at least one DTU among the target DTU set is located within one CG period, and N is an integer greater than or equal to 1.

In some embodiments, the N transmission occasions may be transmission occasions configured or indicated by the network device for the terminal device.

In some embodiments, the N transmission occasions may further be transmission occasions determined by the terminal device based on the transmission occasion configuration information corresponding to the CG period sent from the network device.

In some embodiments, among the target DTU set, each DTU is used to transmit a data transmission block.

In some embodiments, among the target DTU set, data transmission blocks transmitted by different DTUs are independent of each other, that is, data transmission blocks transmitted by different DTUs may be the same or different.

In some embodiments, the network device may explicitly indicate the terminal device that the data transmission blocks transmitted by different DTUs within one CG period are independent of each other, or the data transmission blocks transmitted by different DTUs within one CG period are agreed to be independent of each other through a protocol. All DTUs within one CG period include at least one DTU among the target DTU set.

In some embodiments, there are N1 DTUs within one CG period, and N2 data transmission blocks may be transmitted, where N2 is less than or equal to N1, and N1 and N2 may be integers greater than or equal to 0.

For example, in case that the target DTU set includes 5 different DTUs, the 5 different DTUs transmit 5 same data transmission blocks; or, the 5 different DTUs transmit 5 different data transmission blocks; or, the 5 different DTUs transmit 4 data transmission blocks, where 2 different DTUs transmit one same data transmission block, and the remaining 3 different DTUs transmit 3 different data transmission blocks.

Step 103: transmitting the data based on the target DTU set, where the data includes at least one data transmission block.

In some embodiments, the data is transmitted based on the target DTU set and a transmission parameter set, where the transmission parameter set may be a transmission parameter set determined based on the related art.

In the data transmission method provided by the embodiment of FIG. 1, the target DTU set includes at least one DTU, where at least one DTU is located within one CG period, and N is an integer greater than or equal to 1. The terminal device can transmit at least one data transmission block included in the data through each DTU among the target DTU set, thereby increasing transmission time for data transmission, ensuring that data transmission is completed within a CG period, and avoiding additional data transmission delays.

In some embodiments, the DTU includes one or more of:
N1 transmission occasions; or
M symbols within N2 transmission occasions,
where N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

In some embodiments, the N1 transmission occasions and the N2 transmission occasions are independent of each other, and the N1 transmission occasions may include the N2 transmission occasions or may not include the N2 transmission occasions. In case that the N1 transmission occasions do not include the N2 transmission occasions, that is, the N1 transmission occasions and the N2 transmission occasions may have partially overlapping transmission occasions or may not have overlapping transmission occasions, or the N2 transmission occasions may be one subset of the N1 transmission occasions.

In some embodiments, the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

In some embodiments, a specific transmission occasion (i.e., at least one transmission occasion among the N2 transmission occasions) or each transmission occasion among the N2 transmission occasions may be further divided into multiple symbol sets. Each symbol set includes a specific number of symbols in the transmission occasion and/or symbols at a specified position. In some embodiments, the specific transmission occasion may be a last transmission occasion during data transmission.

In some embodiments, the M symbols within the N2 transmission occasions may be one or more of:
M symbols within each transmission occasion among the N2 transmission occasions;
symbols at M specified positions in N2 transmission occasions; or
M symbols selected from N2 transmission occasions.

In case that M symbols are selected from N2 transmission occasions, the M symbols may cross different slots, or M symbols may be slot symbols crossing different slots starting from a specified position.

In some embodiments, step 101 may include:
receiving the DTU sent from a network device; and/or
determining the DTU based on a first criterion.

In case that the network device sends the DTU, the N1 transmission occasions and/or N2 transmission occasions configured by the network device may have at least one of the following characteristics:
DTU division is able to be performed every N1 and/or N2 transmission occasions from a specified position in the N transmission occasions within a CG period, where the specified position is, for example, at least one of the first transmission occasion within a CG period, the last transmission occasion within a CG period, a specified slot indicated by the network device through a downlink signaling or agreed by a protocol, a specific transmission occasion, a specific frame number, a specific symbol, a specific time, etc.;
a transmission occasion within a specified duration within effective time of a CG configuration, where the specified duration is, for example, at least one of a specified slot, a specific CG period, or a specific time window;
a transmission occasion within a specific frequency domain resource in a CG configuration; or
a transmission occasion within a specific spatial domain resource in a CG configuration.

In some embodiments, N1 transmission occasions among the N transmission occasions within a CG period may be determined as a DTU. In some embodiments, N is greater than or equal to N1. For example, in case that N=8, when N1=2, the network device receives one data transmission block with N1=2 transmission occasions and parses the data transmission block. In some embodiments, N1 may also be greater than N. For example, the terminal device may take transmission occasions within a specified time length as a DTU for data transmission, where the specified time length is, for example, a slot or a transmission occasion or a symbol included in a service transmission period (16.67 ms or 8.3 ms), a specific number of CG periods, a specific time window, etc.

In some embodiments, M symbols in the transmission occasion may also be determined as a DTU. For example, in case that each transmission occasion includes 14 symbols, 2 symbols (i.e., M=2) may be determined as a DTU. The network device may receive data with a minimum number of symbols of 2 as a DTU, and the terminal device may send data with a minimum number of symbols of 2 as a DTU. The M symbols may be applied to a specific transmission occasion, for example, a transmission occasion occupied by a last data transmission block. The M symbols may further be applied to N2 transmission occasions, and a symbol set including M symbols may be used as a DTU.

In some embodiments, DTU division is performed every N1 and/or N2 transmission occasions, which may improve the flexibility of data transmission. In some embodiments, in case that DTU division is performed for every N1 and/or N2 transmission occasions, the N1 transmission occasions and M symbols in the N2 transmission occasions may be jointly determined as a DTU to improve the flexibility of data transmission.

For example, in case that a symbol set is used as a DTU in some transmission occasions (i.e., N2 transmission occasions) among N transmission occasions, for example, when division for a symbol set may only be performed in the last transmission occasion (N2=1) among the N transmission occasions may be divided by symbol sets, transmission resources occupied by data transmission are (M1*N1+M2*M).

For example, in case that a symbol set may be used as a DTU in some transmission occasions among the N transmission occasions, when division for a symbol set may only be performed in specific N2 (N2>1) transmission occasions, data transmission may be performed in (M1*N1+M2*M) transmission resources. (M2*M) includes at least N2 transmission occasions, M1 represents a total number of DTUs including N1 transmission occasions, and M2 represents a total number of DTUs for M symbols.

In some embodiments, a method for division for a symbol set performed in one transmission occasion may be evenly division for M symbols, that is, one transmission occasion includes {M symbols, M symbols, ..., M symbols}, and the DTU is divided every M symbols, or may be divided in a unit of multiples of M symbols (for example: M symbols, 2*M symbols, etc.).

In some embodiments, division for a symbol set is performed with the same granularity (for example, the granularity is 1, 2, 7, 9, 14 symbols) in one transmission occasion, as shown in FIG. 2. In some embodiments, there may be a nested relationship between divisions with different granularity.

FIG. 2 is a schematic diagram of division for a symbol set according to an embodiment of the present application. As shown in FIG. 2, the division includes: results of division for a symbol set with granularity of 2, 7, and 14, respectively.

For example, in a result of division for a symbol set with a granularity of 2, one transmission occasion includes 7 symbol sets.

For example, in a result of division for a symbol set with a granularity of 7, one transmission occasion includes 2 symbol sets.

For example, in a result of division for a symbol set with a granularity of 14, one transmission occasion includes 1 symbol set.

For example, in case that one data transmission block needs to occupy 9 symbols, division for one data transmission block based on a symbol set may only be performed based on the last division method in FIG. 2 for data transmission.

In the present application, the network device configuring a DTU may provide data transmission flexibility for the data transmission of the terminal device. In case that a data transmission block of the terminal device does not need to occupy N transmission occasions, adaptive adjustment may be performed based on the DTU.

In some embodiments, the terminal device further determines the DTU in step 101 based on the DTU sent from the network device.

In some embodiments, the DTU determined by the terminal device is the same as the DTU configured by the network device.

In case that the DTU determined by the terminal device is the same as the DTU configured by the network device, when the DTU determined by the terminal device includes M2 symbols in N3 transmission occasions and/or N4 transmission occasions, and the DTU sent from the network device includes M1 symbols in N1 transmission occasions and/or N2 transmission occasions, the M2 symbols in the N3 transmission occasions and/or N4 transmission occasions determined by the terminal device may be consistent with the M1 symbol in the N1 transmission occasions and/or N2 transmission occasions configured by the network device.

In some embodiments, the terminal device determines the DTU in step 101 based on the first criterion.

The first criterion may be any of the following:
a criterion configured or indicated through the network device;
a criterion agreed by a protocol;
information associated with a preset service characteristic;
channel state information; or
a criterion for implementation of the terminal device.

In some embodiments, an operation of determining the DTU in step 101 based on the first criterion includes at least one of:
in case that the first criterion is channel state information, the network device may configure multiple kind of DTUs and a channel state information threshold value for each kind of DTU, and the terminal device may determine the DTU in step 101 from the multiple kind of DTUs based on the channel state information; or
in case that the first criterion is information associated with a preset service characteristic, the network device may configure multiple kind of DTUs and a threshold value of a data packet size (or a service type) for each kind of DTU, and the terminal device may determine the DTU in step 101 from the multiple kind of DTUs based on the data packet size (or service type);
in case that the first criterion is a criterion for implementation of the terminal device, the terminal device may determine the DTU in 101 by itself; or
transmission occasions associated with the same data transmission block or the same packet data unit or the same packet data unit set or the same logical channel ID are determined as the DTU in step 101.

A method that the terminal device may determine the DTU in 101 by itself includes the following.

In some embodiments, the terminal device determines a subset of the DTU configured by the network device as the DTU in step 101.

In case that the terminal device may determine the DTU in 101 by itself, the method that the terminal device may determine the DTU in 101 by itself may be the same as the method that the network device configures the DTU, and further details are not repeated here.

In case that the terminal device determines a subset of the DTU configured by the network device as the DTU in step 101, for example, the DTU determined by the terminal device may be a set of transmission occasions or symbol sets at a specified position in the DTU configured by the network device.

In some embodiments, the N transmission occasions may be determined by:
receiving transmission occasion configuration information corresponding to a CG period sent from a network device, and determining the N transmission occasions based on the transmission occasion configuration information.

In some embodiments, the transmission occasion configuration information includes one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

In some embodiments, the period of the transmission occasion may be a repetition time gap of the transmission occasion within a CG period, such as 1/N1 of the CG period, where N1 is greater than 0, or may be a period of a specific transmission occasion. In some embodiments, the specific transmission occasion may be, for example, the first or last transmission occasion within a CG period.

In some embodiments, the offset value of the transmission occasion may be an offset value of a specific transmission occasion within a CG period, or an offset value of a transmission occasion within a period of each transmission occasion. In some embodiments, the specific transmission occasion may be, for example, the first transmission occasion or the last transmission occasion within a CG period.

In some embodiments, the N transmission occasions are one or more of:
N adjacent uplink slots;
N adjacent uplink symbol sets;
N uplink slots within a specified duration;
N uplink symbol sets within a specified slot;
N uplink slots at a specified slot position; or
N uplink symbol sets at a specified symbol position.

In some embodiments, the N transmission occasions satisfy one or more of:
the N transmission occasions are located at a same symbol position in N slots;
the N transmission occasions occupy a same number of symbols in N slots;
symbol positions of different transmission occasions among the N transmission occasions are independent of each other, and/or each transmission occasion among the N transmission occasions does not cross a slot;
symbol positions of different transmission occasions among the N transmission occasions are independent of each other, and/or at least one transmission occasion among the N transmission occasions crosses a slot;
different transmission occasions among the N transmission occasions have a preset gap within a same slot, where the preset gap is greater than or equal to 0 symbol; or
slots where different transmission occasions among the N transmission occasions are located have a preset gap, where the preset gap is greater than or equal to 0 slot.

In some embodiments, step 102 may further include:
obtaining a transmission parameter set of the DTU; and
determining the target DTU set based on the transmission parameter set of the DTU, the DTU, and the N transmission occasions.

In some embodiments, in the present application, the transmission parameter set includes one or more of:
time domain information;
frequency domain information;
spatial domain information; or
power domain information.

In some embodiments, the time domain information may include one or more of the following in addition to the transmission occasion configuration information:
a slot offset value K2 of a physical uplink shared channel (PUSCH) from a physical downlink control channel (PDCCH);
a start and length indicator value (SLIV) of a PUSCH;
a start symbol position S and a symbol length L of a PUSCH;
a modulation and coding scheme (MCS) level;
retransmission related information of a PUSCH;
system frame number (SFN) reference time; or
a data scrambling identifier of a PUSCH.

In some embodiments, the frequency domain information includes one or more of:
frequency domain resource allocation; or
a frequency hopping type.

In some embodiments, the spatial domain information includes one or more of:
an antenna port;
codebook related information; or
channel sounding reference signal (SRS) resource indicator.

In some embodiments, the transmission parameter set further includes a common transmission parameter set and/or a dedicated transmission parameter set,
where the common transmission parameter set includes a common transmission parameter set of all DTUs within the one CG period; and
the dedicated transmission parameter set includes one or more of:
   a dedicated transmission parameter set of a DTU within a first duration within the one CG period; or
   a dedicated transmission parameter set of a second DTU within the one CG period.

In some embodiments, common transmission parameters and dedicated transmission parameters do not overlap with each other, that is, the base station will not configure common transmission parameters and dedicated transmission parameters with the same meaning. In some embodiments, common transmission parameters and dedicated transmission parameters with the same meaning may be configured simultaneously, while the dedicated transmission parameters have a higher decision priority at this time.

In some embodiments, determining the target DTU set based on the transmission parameter set of the DTU, the DTU, and the N transmission occasions includes:
starting from a first specified position and according to the DTU, determining, based on the N transmission occasions, a candidate DTU set; and
determining the target DTU set based on the transmission parameter set of the DTU and the candidate DTU set.

In some embodiments, the first specified position is determined based on one or more of:
an indication through a downlink signaling sent from a network device or a configuration through a network device;
an agreement of a protocol;
a time gap associated with a service characteristic; or
a time position determined by the terminal device.

In some embodiments, the first specified position may be one or more of:
a start position of a CG period;
an end position of a CG period;
the first transmission occasion within a CG period;
the last transmission occasion within a CG period;
a position of the network device indicated by a downlink signaling;
a time position agreed by a protocol;
a time position determined by the terminal device; or
a time gap associated with a service characteristic.

In some embodiments, the service characteristic includes one or more parameters of data packet arrival time, packet delay budget (PDB) of service data transmission, service data volume, service transmission delay, service data packet transmission remaining delay, data buffer state, etc.

For example, the terminal device may use transmission occasions or slots that are adjacent or have a specific time gap as the first specified position based on the arrival time of an uplink service, or transmission occasions or slots that are adjacent or have a specific time gap in case that a state of a terminal device data buffer is not empty as the first specified position. The specific time gap here may be agreed by a protocol, or configured by a base station.

In some embodiments, starting from the first specified position among the N transmission occasions, each DTU transmission occasion is divided into one DTU to obtain a candidate DTU set.

In some embodiments, transmission occasions after the first specified position among the N transmission occasions are divided based on transmission occasions and/or symbol sets included in the DTU, and multiple DTUs are obtained and determined as the candidate DTU set.

In some embodiments, the candidate DTU set and the target DTU set are the same or different,
where in case that the candidate DTU set and the target DTU set are different, the candidate DTU set includes the target DTU set.

In some embodiments, the transmission parameter set of the DTU may be obtained through the following method 11 and method 12.

Method 11: receiving a transmission parameter set of the DTU sent from a network device; and/or
determining a transmission parameter set of the DTU based on a second criterion.

In some embodiments, the transmission parameter set of the DTU sent from the network device is determined as the transmission parameter set of the DTU.

In some embodiments, the second criterion is one or more of:
a criterion configured or indicated through the network device;
a criterion agreed by a protocol;
information associated with a preset service characteristic;
channel state information; or
a criterion for implementation of the terminal device.

In some embodiments, determining the transmission parameter set of the DTU based on the second criterion includes:
implementing, by the terminal device, an algorithm internally to determine the transmission parameter set of the DTU.

For example, the terminal device may select a transmission parameter set corresponding to the DTU based on a channel transmission status.

In some embodiments, determining the transmission parameter set of the DTU based on the second criterion and the transmission parameter set of the DTU sent from the network device includes:
adjusting or updating, by the terminal device, one or more parameters among the transmission parameter set of the DTU sent from the network device based on the second criterion, and determining the adjusted or updated transmission parameter set as the transmission parameter set of the DTU.

Method 12: receiving at least one piece of transmission parameter set configuration information sent from a network device; and determining the transmission parameter set of the DTU based on the at least one piece of transmission parameter set configuration information;
and/or
determining the transmission parameter set of the DTU based on a third criterion.

In some embodiments, the third criterion is one or more of:
a criterion configured or indicated through the network device;
a criterion agreed by a protocol;
information associated with a preset service characteristic;
channel state information; or
a criterion for implementation of the terminal device.

In some embodiments, determining the transmission parameter set of the DTU based on the third criterion includes:
selecting, based on usage threshold values of different transmission parameter sets corresponding to the DTU, from multiple transmission parameter sets configured by the network device to obtain the transmission parameter set of the DTU; or
selecting, based on priorities of different transmission parameter sets corresponding to the DTU, from multiple transmission parameter sets configured by the network device to obtain the transmission parameter set of the DTU; or
selecting, based on application service types of different transmission parameter sets corresponding to the DTU, from multiple transmission parameter sets configured by the network device to obtain the transmission parameter set of the DTU; or
selecting, based on information associated with an application service characteristic of different transmission parameter sets corresponding to the DTU, from multiple transmission parameter sets configured by the network device to obtain the transmission parameter set of the DTU.

In some embodiments, the usage threshold values of different transmission parameter sets corresponding to the DTU include one or more of:
a threshold value of channel state information; or
a threshold value of a transmission data packet size; or
a threshold value of buffer data volume.

For example, the terminal device may select, based on channel state information (CSI), from the transmission parameter set of the DTU sent from the network device to obtain the transmission parameter set of the DTU.

In some embodiments, determining the transmission parameter set of the DTU based on the third criterion and at least one piece of transmission parameter set configuration information includes:
for example, in case that transmission parameter sets corresponding to the DTU among the candidate DTU set within a CG period are the same, and the base station pre-configures different modulation and coding schemes for each candidate transmission occasion: MCS_i and MCS_j, which corresponding to specific data packet type 1 and specific data packet type 2 respectively, selecting, by the terminal device, the corresponding MCS based on the data packet type for transport block size (TBS) calculation and determination of the number of transmission occasions.

In some embodiments, the at least one piece of transmission parameter set configuration information includes one or more of:
at least one transmission parameter set of each DTU among the target DTU set;
at least one transmission parameter set of each DTU within a specified duration; or
at least one transmission parameter set of each specified DTU.

In some embodiments, the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

The DTU configured by the network device is in a one-to-one correspondence with the transmission parameter set configured by the network device.

In some embodiments, the terminal device performs data transmission based on a threshold value, a priority, or a service type used for the determined DTU and/or the determined DTU transmission parameter set. In case that the data transmitted by the terminal device satisfies a corresponding threshold value, a corresponding priority, or a corresponding service type, data transmission is performed by using the determined DTU and/or the determined DTU transmission parameter set. At this time, the target DTU set may include a subset or a full set of a set consisting of N transmission occasions.

In some embodiments, in case that the terminal determines the target DTU set, a protocol agrees that the terminal device needs to perform selection based on a certain criterion, such as selecting the target DTU set based on a complete time unit. The time unit may be, for example, a DTU, a slot, a CG period, a specific number of symbols, etc. determined by the terminal device.

In some embodiments, in case that the transmission parameter set of the DTU is determined, the terminal device determines the target DTU set, that is, a number K of candidate DTUs, based on data volume in a buffer (or a data packet size) and the transmission parameter set of the DTU, where K may be an integer or a non-integer. In case that K is a non-integer, the DTU includes part of symbols in the transmission occasion. Locations of K DTUs may be specified in the N transmission occasions, such as K DTUs near a start position of a period, or K DTUs near an end position of a period, or any K DTUs in one period, or a specific time gap different from the service arrival time.

In some embodiments, the terminal device may determine the target DTU set based on information associated with a service characteristic. The information associated with the service characteristic includes at least one of a PDB, a transmission rate, a maximum data packet size, a minimum data packet size, or an average data packet size of a specific service, data volume of to-be-transmitted data in the buffer of the terminal device, and other related information. For example, the terminal device may perform TBS calculation based on the PDB and the data in the buffer of the terminal device, and select an available transmission occasion in the PDB. For example, DTU serial numbers available in the PDB are DTU 1, DTU 2, DTU 4, and DTU 5, where DTU 3 cannot be used due to resource conflicts, and DTU 4 and DTU 5 may complete data transmission in the PDB with high reliability based on resource information pre-configured by the base station. The terminal device then adopts DTU 4 and DTU 5, and notifies the network device to release DTU 1 and DTU 2.

For example, the terminal device determines the transmission parameter set of the DTU among the target DTU set for data transmission based on a specific criterion. In some embodiments, the specific criterion may be at least one of configuration or indication of the network device, agreement of a protocol, information associated with a service characteristic, an algorithm implemented by the terminal device, etc.

The terminal device may select the MCS level and the number of transmission occasions based on the CSI and packet size.

For example, available DTUs in one CG period are DTU 1, DTU 2, DTU 4, and DTU 5, where DTU 3 cannot be used due to resource conflict. Based on MCS_i and MCS_j pre-configured by the network device, the terminal device selects DTU 4, DTU 5, and MCS_i that may complete the data transmission with high reliability based on the CSI and the data packet size. The terminal device then adopts DTU 4 and DTU 5, and notifies the network device to release DTU 1, DTU 2, and MCS_i.

The terminal device may select the transmission parameter set of the DTU based on the information associated with the service characteristic.

For example, available DTUs within a CG period are DTU 1, DTU 2, DTU 4, and DTU 5, where DTU 3 cannot be used due to resource conflict. It is assumed that transmission parameter sets of the DTU within a CG period are the same, and the network device pre-configures MCS_i and MCS_j for each DTU, where MCS_i corresponds to a specific data packet 1, and MCS_j corresponds to a specific data packet 2. The terminal device selects the corresponding MCS based on the data packet type. Furthermore, the terminal device performs TBS calculation and determines the number of transmission occasions based on the selected MCS.

In some embodiments, the method for data transmission provided by the embodiment of the present application may further include:
sending, by the terminal device, an uplink signaling to a network device.

In some embodiments, the uplink signaling includes information associated with the target DTU set.

In some embodiments, the uplink signaling is one or more of:
an uplink physical layer signaling;
a media access control (MAC) layer signaling; or
a radio resource control (RRC) layer signaling.

In some embodiments, the uplink physical layer signaling is configured grant uplink control information (CG-UCI) or uplink control information (UCI); and
the MAC layer signaling is media access control control element (MAC CE).

For example, the terminal device indicates or feeds back based on at least one transmission parameter set corresponding to the transmission occasion preconfigured by the network device. It is assumed that one of the at least one transmission parameter set configured by the network device for the transmission occasion is a default parameter set and the other is an optional parameter set. The terminal device may indicate the network device to use the default parameter set or the optional parameter set through parameter identification information. For at least one transmission parameter set, the terminal device may further directly feed back a sequence number or a related index value of the corresponding transmission parameter set through an uplink signaling. In case that the transmission parameter sets of different transmission occasions are independent of each other, the terminal device may send an uplink signaling at a specified position of each transmission occasion to indicate the transmission parameter set information used for the transmission occasion or subsequent transmission occasions, where the transmission parameter set information is, for example, a sequence number or a related index value of the transmission parameter set.

In some embodiments, the notification carries a target resource information index, where the target resource information index is, for example, an MCS level.

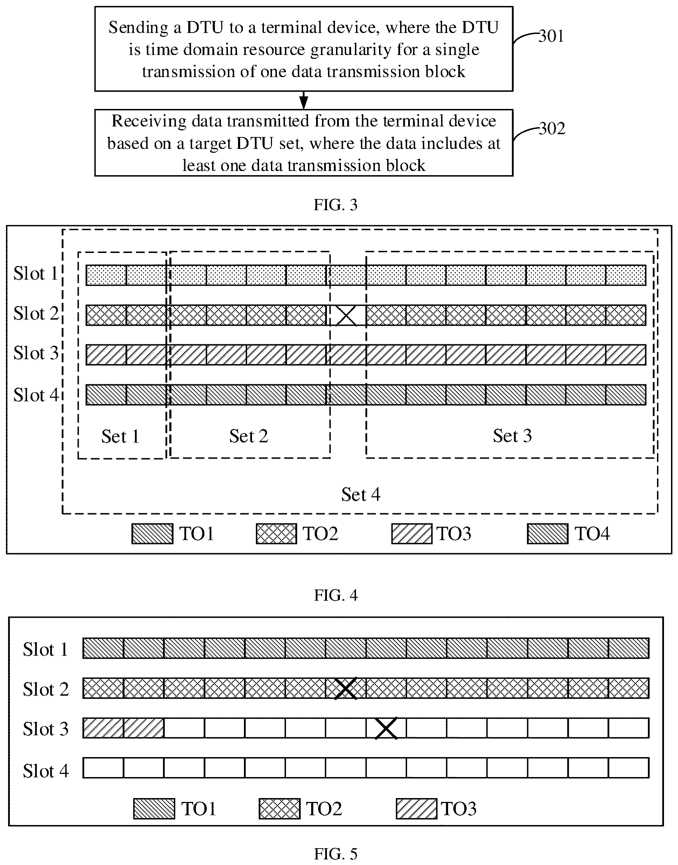

FIG. 3 is a second schematic flowchart of a method for data transmission according to an embodiment of the present application. The method shown in the embodiment of FIG. 3 is performed by a network device, or an apparatus for data transmission set at the network device, and the apparatus for data transmission may be implemented by a combination of software and/or hardware. As shown in FIG. 3, the method includes:
Step 301: sending a data transmission unit (DTU) to a terminal device, where the DTU is time domain resource granularity for a single transmission of one data transmission block.
Step 302: receiving data transmitted from the terminal device based on a target DTU set, where the data includes at least one data transmission block.

The target DTU set is determined based on the DTU and N transmission occasions within one configured grant (CG) period, at least one DTU among the target DTU set is located within one CG period, and N is an integer greater than or equal to 1.

In some embodiments, the DTU in step 301 includes one or more of:
N1 transmission occasions; or
M symbols within N2 transmission occasions,
where N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

In some embodiments, the N transmission occasions may be periodic or semi-periodic.

In case that the N transmission occasions are at the same symbol position in N slots, uplink resources in one slot are divided based on certain granularity. For example, the granularity may be a specific number of symbols or any number of symbols. For example, the specific number of symbols is 1, 2, 7, 14, etc. Details may be referred to FIG. 4.

FIG. 4 is a first schematic diagram of N transmission occasions configured by a network device according to an embodiment of the present application. As shown in FIG. 4: in case that N is equal to 4, in 4 slots (that is, slot 1, slot 2, slot 3, and slot 4 respectively), division for 2 symbols is performed, and 4 transmission occasions may be obtained (each transmission occasion includes 2 symbols, such as set 1); division for 4 symbols is performed, and 4 transmission occasions may be obtained (each transmission occasion includes 4 symbols, such as set 2); division for 7 symbols is performed, and 4 transmission occasions may be obtained (each transmission occasion includes 7 symbols, such as set 3); or division for 14 symbols is performed, and 4 transmission occasions may be obtained (each transmission occasion includes 14 symbols, such as set 4). In FIG. 4, the 4 transmission occasions are in the same symbol position in 4 slots. It should be noted that in FIG. 4, the 4 transmission occasions are TO1, TO2, TO3, and TO4, respectively.

In case that all symbol positions in N transmission occasions are independent of each other, the following division methods 21 and 22 may be used.

A total number (that is, N_total symbols) of symbols occupied by N transmission occasions configured by the network device is determined, where the symbol where each transmission occasion is located does not cross a slot, that is, the transmission occasions occupy all symbols of one slot at most.

In some embodiments, in case that the configured transmission occasions do not conflict with other signals/channels, the N transmission occasions are divided into N_total=14 symbols*(N-1)+M symbols, where 1≤M≤ 14.

In some embodiments, the N transmission occasions are also divided into N_total=M_max symbol*(N-1)+M symbol, where 1≤M≤M_max, and M_max is a maximum number of symbols occupied by one transmission occasion in case that the transmission occasion does not conflict with other signals/channels. M and/or M_max may be configured or indicated by a higher layer signaling, a MAC layer signaling, or a physical layer (PHY) signaling, or may be a value agreed by a protocol.

FIG. 5 is a second schematic diagram of N transmission occasions configured by a network device according to an embodiment of the present application. FIG. 5 is illustrated by taking N_total=14 symbols*(N-1)+M symbols as an example. As shown in FIG. 5, in case that N=3 and N_total=30, in 3 transmission occasions (that is, TO1, TO2, and TO3 respectively), TO1 occupies 14 symbols, TO2 occupies 13 symbols, and TO3 occupies 2 symbols.

In some embodiments, a total number (that is, N_total symbols) of symbols occupied by N transmission occasions configured by the network device is determined, where the symbol where each transmission occasion is located may cross a slot, and different transmission occasions in the same slot are adjacent.

In some embodiments, the network device may also divide the N transmission occasions by configuring a number of transmission occasions and/or a number of symbols occupied by a single transmission occasion.

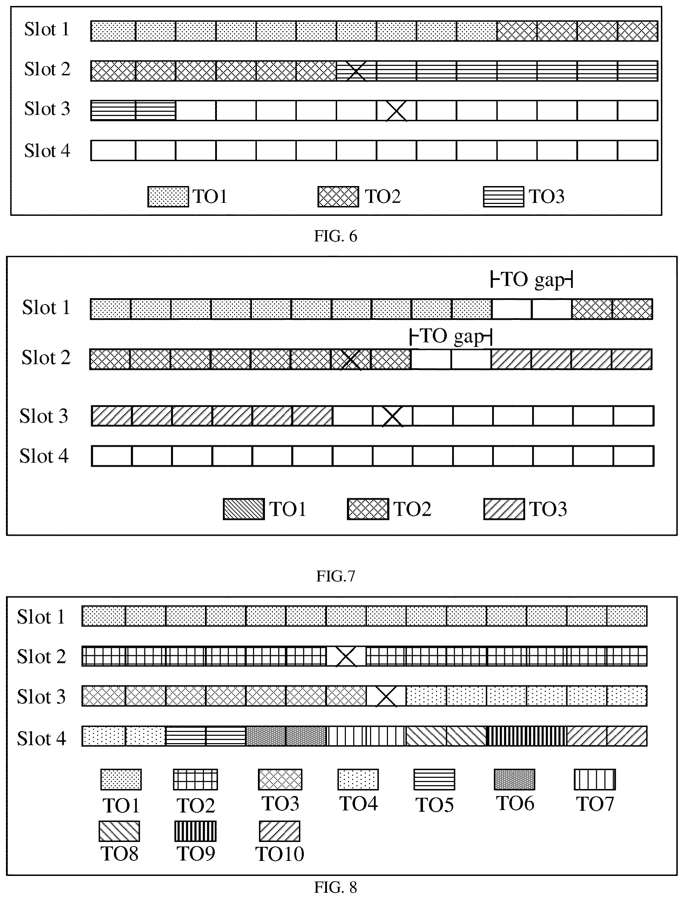

FIG. 6 is a third schematic diagram of N transmission occasions configured by a network device according to an embodiment of the present application. As shown in FIG. 6, N=3, N_total=30, and each transmission occasion occupies 10 symbols are used as an example for description.

In some embodiments, all symbol positions in the N transmission occasions are independent of each other, and there is a certain preset gap TO_gap between the transmission occasions, where TO_gap is greater than or equal to 0 symbol/slot/millisecond. For example, by configuring a number of transmission occasions, a gap between transmission occasions, a number of slots/symbols corresponding to each transmission occasion, and other information, the N transmission occasions are divided, as shown in FIG. 7.

FIG. 7 is a fourth schematic diagram of N transmission occasions configured by a network device according to an embodiment of the present application. As shown in FIG. 7, slots/symbols occupied by each transmission occasion may be independent of each other, and gaps between different transmission occasions may also be independent.

In some embodiments, in case that the configured transmission occasions conflict with other signals/channels, any of the following methods may be used to resolve the conflict:
a conflict symbol is taken as a number of occupied symbols, to ensure granularity of resource occupation; or
a conflict symbol is not taken as a number of occupied symbols, to ensure resource validity.

In some embodiments, the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

In some embodiments, the method provided by the embodiment of FIG. 3 further includes: sending transmission occasion configuration information corresponding to a CG period to the terminal device.

In some embodiments, the transmission occasion configuration information includes one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

In some embodiments, the method provided by the embodiment of FIG. 3 further includes: sending a transmission parameter set of the DTU to the terminal device.

In some embodiments, the transmission parameter set of the DTU includes a common transmission parameter set and/or a dedicated transmission parameter set,
where the common transmission parameter set is a common transmission parameter set of all DTUs within the one CG period; and
the dedicated transmission parameter set is one or more of:
   a dedicated transmission parameter set of a DTU within a specified duration within the one CG period; or
   a dedicated transmission parameter set of a specified DTU within the one CG period.

In some embodiments, the common transmission parameter set and the dedicated transmission parameter set do not overlap, that is, the network device would not configure a common transmission parameter set and a dedicated transmission parameter set with the same meaning. In some embodiments, a common transmission parameter set and a dedicated transmission parameter set with the same meaning may be configured simultaneously, while the dedicated transmission parameter set has a higher decision priority at this time.

In some embodiments, transmission parameter sets of different DTUs configured by the network device are independent of each other, where the network device configures the transmission parameter set of the DTU. In case that the DTU is one transmission occasion, the transmission parameter set of the DTU may have at least one of the following characteristics:
transmission parameter sets for transmission occasions within different slots are independent of each other;
transmission parameter sets of different transmission occasions within one slot are independent of each other; or
transmission occasions across a slot are independent of transmission parameter sets within different slots.

FIG. 8 is a schematic diagram of a relationship between a transmission parameter set and a data transmission unit (DTU) according to an embodiment of the present application. As shown in FIG. 8, in case that transmission parameter sets of transmission occasions in different slots are independent of each other, for example, the network device configures or indicates transmission parameter sets of transmission occasions in slot 1 and slot 2 respectively, and the transmission parameter sets of the transmission occasions in slot 1 and slot 2 are different, where the same slot includes at least one transmission occasion.

In case that transmission parameter sets of different transmission occasions in one slot are independent of each other, for example, transmission parameter sets of different transmission occasions in slot 4 are independent of each other.

In case that transmission occasions across a slot have independent transmission parameter sets in different slots, for example, transmission occasions across slot 3 and slot 4 may use the same transmission parameter set or may use independent transmission parameter sets in different slots.

In the embodiment of the present application, the transmission parameter sets of different DTUs are independent of each other, which is beneficial to improving adaptability of a link and adaptability of transmitted data volume during data transmission, and may obtain link adaptation gain and improve spectrum efficiency of data transmission.

For a transmission parameter set of a DTU, the network device may perform configuration or indication by configuring a transmission parameter set list and/or a transmission parameter set index of at least one transmission occasion, where the transmission parameter set list includes at least one column in Table 1. The transmission parameter set is also applicable to a subset of transmission occasions, that is, corresponding transmission parameter sets are respectively configured for subsets of transmission occasions.

**Table 1**

| .DTU index | Transmission parameter set index | Corresponding symbol set: SLIV | MCS level | Slot offset K2 | Number of slots |
|---|---|---|---|---|---|
| DTU 1 | Transmission parameter set 1 | SLIV_1 | I_{MCS},₁ | K2_1 | 1 |
| .... | .... | .... | .... | .... | .... |
| DTU N | Transmission parameter set N | SLIV_N | I_{MCS,N} | K2_N | N |

In some embodiments, at least one set of transmission parameter sets may be configured for a single DTU. For example, in the above table, at least one column from the second column to the last column corresponds to a single DTU, where a DTU is, for example, one transmission occasion.

In some embodiments, the method provided by the embodiment of FIG. 3 further includes: sending at least one piece of transmission parameter set configuration information to the terminal device.

In some embodiments, the at least one piece of transmission parameter set configuration information includes one or more of:
at least one transmission parameter set of each DTU among the target DTU set;
at least one transmission parameter set of each DTU within a specified duration; or
at least one transmission parameter set of each specified DTU.

In some embodiments, the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

In some embodiments, the method further includes:
receiving an uplink signaling sent from the terminal device, where the uplink signaling includes information associated with the target DTU set.

In some embodiments, the uplink signaling is one or more of:
an uplink physical layer signaling;
a media access control (MAC) layer signaling; or
a radio resource control (RRC) layer signaling.

In some embodiments, the uplink physical layer signaling is configured grant uplink control information (CG-UCI) or uplink control information (UCI); and
the MAC layer signaling is media access control control element (MAC CE).

In some embodiments, receiving the data transmitted from the terminal device based on the target DTU set includes:
receiving, based on the uplink signaling, the data transmitted from the terminal device based on the target DTU set.

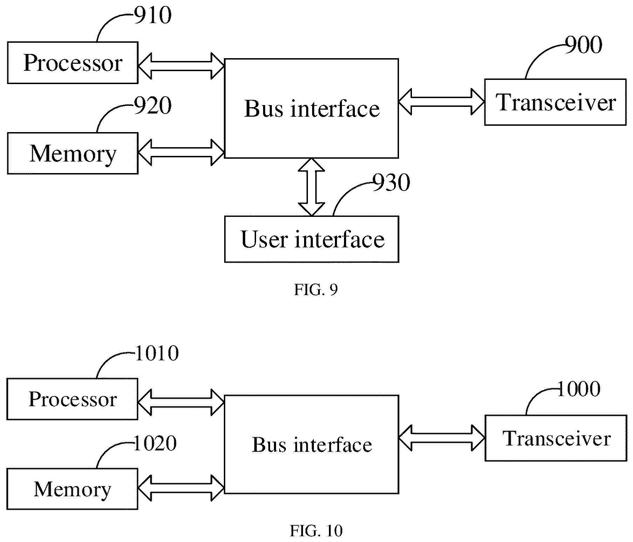

FIG. 9 is a schematic structural diagram of a terminal device according to an embodiment of the present application. As shown in FIG. 9, the terminal device includes a memory 920, a transceiver 900 and a processor 910.

The memory 920 is used for storing a computer program.

The transceiver 900 is used for receiving and sending data under control of the processor 910.

The processor 910 is used for reading the computer program in the memory 920 and performing the following operations:
obtaining a data transmission unit (DTU), where the DTU is time domain resource granularity for a single transmission of one data transmission block;
determining, based on the DTU and N transmission occasions within one configured grant (CG) period, a target DTU set for transmitting data, where at least one DTU among the target DTU set is located within one CG period, and N is an integer greater than or equal to 1; and
transmitting the data based on the target DTU set, where the data includes at least one data transmission block.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits, etc., which are well known in the art, and therefore are not further described in the present application. A bus interface provides an interface. The transceiver 900 may include multiple elements, i.e., including a transmitter and a receiver, units for providing communication with various other devices over transmission media including wireless channels, wired channels, fiber optic cables, and the like. For different user devices, a user interface 930 may also be an interface capable of externally or internally connecting required devices, and the connected devices include but are not limited to a small keypad, a display, a speaker, a microphone, a joystick, and the like.

The processor 910 is responsible for managing the bus architecture and general processing, and the memory 920 may store data used by the processor 910 when performing operations.

In some embodiments, the processor 910 may be a central processing unit (CPU), an application specific integrated circuit (ASIC), a field programmable gate array (FPGA) or a complex programmable logic device (CPLD). The processor may also adopt a multi-core architecture.

The processor 910 calls the computer program stored in the memory 920 to perform any of the methods provided by the embodiments of the present application according to an obtained executable instruction. The processor 910 and the memory 920 may also be arranged physically separately.

In some embodiments, the DTU includes one or more of:
N1 transmission occasions; or
M symbols within N2 transmission occasions,
where N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

In some embodiments, the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

In some embodiments, obtaining the DTU includes:
receiving the DTU sent from a network device; and/or
determining the DTU based on a first criterion.

In some embodiments, the processor 910 is further used for performing the following operation:
receiving transmission occasion configuration information corresponding to a CG period sent from a network device, and determining the N transmission occasions based on the transmission occasion configuration information.

In some embodiments, the transmission occasion configuration information includes one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

In some embodiments, determining, based on the DTU and the N transmission occasions within one CG period, the target DTU set for transmitting the data further includes:
obtaining a transmission parameter set of the DTU; and
determining the target DTU set based on the transmission parameter set of the DTU, the DTU, and the N transmission occasions.

In some embodiments, determining the target DTU set based on the transmission parameter set of the DTU, the DTU, and the N transmission occasions includes:
starting from a first specified position and according to the DTU, determining, based on the N transmission occasions, a candidate DTU set; and
determining the target DTU set based on the transmission parameter set of the DTU and the candidate DTU set.

In some embodiments, the first specified position is determined based on one or more of:
an indication through a downlink signaling sent from a network device or a configuration through a network device;
an agreement of a protocol;
a time gap associated with a service characteristic; or
a time position determined by the terminal device.

In some embodiments, the target DTU set is a subset or a full set of the candidate DTU set,
where in case that the target DTU set is the subset of the candidate DTU set, the candidate DTU set includes the target DTU set.

In some embodiments, obtaining the transmission parameter set of the DTU includes:
receiving a transmission parameter set of the DTU sent from a network device; and/or
determining a transmission parameter set of the DTU based on a second criterion.

In some embodiments, obtaining the transmission parameter set of the DTU includes:
receiving at least one piece of transmission parameter set configuration information sent from a network device; and determining the transmission parameter set of the DTU based on the at least one piece of transmission parameter set configuration information; and/or
determining the transmission parameter set of the DTU based on a third criterion,
where the at least one piece of transmission parameter set configuration information includes one or more of:
   at least one transmission parameter set of each DTU among the target DTU set;
   at least one transmission parameter set of each DTU within a specified duration; or
   at least one transmission parameter set of each specified DTU.

In some embodiments, the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

In some embodiments, the first criterion, the second criterion or the third criterion is any of:
a criterion configured or indicated through the network device;
a criterion agreed by a protocol;
information associated with a preset service characteristic;
channel state information; or
a criterion for implementation of the terminal device.

In case that the first criterion, the second criterion, or the third criterion is a criterion configured or indicated by the network device, the network device configures or indicates through a downlink signaling. In some embodiments, the downlink signaling includes at least one of a physical layer downlink signaling, a MAC layer signaling, or an RRC signaling.

In some embodiments, the transmission parameter set further includes a common transmission parameter set and/or a dedicated transmission parameter set,
where the common transmission parameter set includes a common transmission parameter set of all DTUs within the one CG period; and
the dedicated transmission parameter set includes one or more of:
   a dedicated transmission parameter set of a DTU within a first duration within the one CG period; or
   a dedicated transmission parameter set of a second DTU within the one CG period.

In some embodiments, the N transmission occasions are one or more of:
N adjacent uplink slots;
N adjacent uplink symbol sets;
N uplink slots within a specified duration;
N uplink symbol sets within a specified slot;
N uplink slots at a specified slot position; or
N uplink symbol sets at a specified symbol position.

In some embodiments, the N transmission occasions satisfy one or more of:
the N transmission occasions are located at a same symbol position in N slots;
the N transmission occasions occupy a same number of symbols in N slots;
symbol positions of different transmission occasions among the N transmission occasions are independent of each other, and/or each transmission occasion among the N transmission occasions does not cross a slot;
symbol positions of different transmission occasions among the N transmission occasions are independent of each other, and/or at least one transmission occasion among the N transmission occasions crosses a slot;
different transmission occasions among the N transmission occasions have a preset gap within a same slot, where the preset gap is greater than or equal to 0 symbol; or
slots where different transmission occasions among the N transmission occasions are located have a preset gap, where the preset gap is greater than or equal to 0 slot.

In some embodiments, the processor 910 is further used for performing the following operation:
sending an uplink signaling to a network device, where the uplink signaling includes information associated with the target DTU set.

In some embodiments, the uplink signaling is one or more of:
an uplink physical layer signaling;
a media access control (MAC) layer signaling; or
a radio resource control (RRC) layer signaling.

In some embodiments, the uplink physical layer signaling is configured grant uplink control information (CG-UCI) or uplink control information (UCI).

The above-mentioned terminal device provided by the embodiment of the present application may implement all method steps implemented by the method embodiment performed by the terminal device, and may achieve the same effect. The parts and beneficial effects of this embodiment that are the same as the method embodiment would not be described in detail here.

FIG. 10 is a schematic structural diagram of a network device according to an embodiment of the present application. As shown in FIG. 10, the network device includes a memory 1020, a transceiver 1000 and a processor 1010.

The memory 1020 is used for storing a computer program.

The transceiver 1000 is used for receiving and sending data under control of the processor 1010.

The processor 1010 is used for reading the computer program in the memory 1020 and performing the following operations:
sending a data transmission unit (DTU) to a terminal device, where the DTU is time domain resource granularity for a single transmission of one data transmission block; and
receiving data transmitted from the terminal device based on a target DTU set, where the data includes at least one data transmission block,
where the target DTU set is determined based on the DTU and N transmission occasions within one configured grant (CG) period, at least one DTU among the target DTU set is located within one CG period, and N is an integer greater than or equal to 1.

In some embodiments, the transceiver 1000 is used for receiving and sending data under control of the processor 1010.

In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, etc., which are well known in the art, and therefore are not further described in the present application. A bus interface provides an interface. The transceiver 1000 may include multiple elements, i.e., including a transmitter and a receiver, units for providing communication with various other devices over transmission media including wireless channels, wired channels, fiber optic cables, and the like. The processor 1010 is responsible for managing the bus architecture and general processing, and the memory 1020 may store data used by the processor 1010 when performing operations.

The processor 1010 may be a central processing unit (CPU), an application specific integrated circuit (ASIC), a field programmable gate array (FPGA) or a complex programmable logic device (CPLD). The processor may also adopt a multi-core architecture.

In some embodiments, the DTU includes one or more of:
N1 transmission occasions; or
M symbols within N2 transmission occasions,
where N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

In some embodiments, the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

In some embodiments, the processor 1010 is further used for performing the following operation:
sending transmission occasion configuration information corresponding to a CG period to the terminal device.

In some embodiments, the transmission occasion configuration information includes one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

In some embodiments, the processor 1010 is further used for performing the following operation:
sending a transmission parameter set of the DTU to the terminal device.

In some embodiments, the transmission parameter set of the DTU includes a common transmission parameter set and/or a dedicated transmission parameter set,
where the common transmission parameter set is a common transmission parameter set of all DTUs within the one CG period; and
the dedicated transmission parameter set is one or more of:
   a dedicated transmission parameter set of a DTU within a specified duration within the one CG period; or
   a dedicated transmission parameter set of a specified DTU within the one CG period.

In some embodiments, the processor 1010 is further used for performing the following operation:
sending at least one piece of transmission parameter set configuration information to the terminal device.

In some embodiments, the at least one piece of transmission parameter set configuration information includes one or more of:
at least one transmission parameter set of each DTU among the target DTU set;
at least one transmission parameter set of each DTU within a specified duration; or
at least one transmission parameter set of each specified DTU.

In some embodiments, the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

In some embodiments, the processor 1010 is further used for performing the following operation:
receiving an uplink signaling sent from the terminal device, where the uplink signaling includes information associated with the target DTU set.

In some embodiments, the uplink signaling is one or more of:
an uplink physical layer signaling;
a media access control (MAC) layer signaling; or
a radio resource control (RRC) layer signaling.

In some embodiments, the uplink physical layer signaling is configured grant uplink control information (CG-UCI) or uplink control information (UCI).

In some embodiments, receiving the data transmitted from the terminal device based on the target DTU set includes:
receiving, based on the uplink signaling, the data transmitted from the terminal device based on the target DTU set.

The above-mentioned network device provided by the embodiment of the present application may implement all method steps implemented by the method embodiment performed by the network device, and may achieve the same effect. The parts and beneficial effects of this embodiment that are the same as the method embodiment would not be described in detail here.

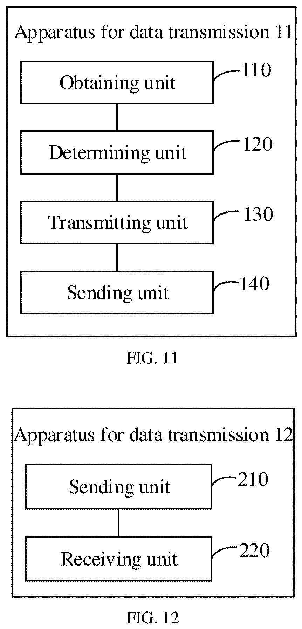

FIG. 11 is a first schematic structural diagram of an apparatus for data transmission according to an embodiment of the present application. The apparatus for data transmission 11 shown in FIG. 11 is for use in a terminal device. As shown in FIG. 11, the apparatus for data transmission 11 includes:
an obtaining unit 110, used for obtaining a data transmission unit (DTU), where the DTU is time domain resource granularity for a single transmission of one data transmission block;
a determining unit 120, used for determining, based on the DTU and N transmission occasions within one configured grant (CG) period, a target DTU set for transmitting data, where at least one DTU among the target DTU set is located within one CG period, and N is an integer greater than or equal to 1; and
a transmitting unit 130, used for transmitting the data based on the target DTU set, where the data includes at least one data transmission block.

In some embodiments, the DTU includes one or more of:
N1 transmission occasions; or
M symbols within N2 transmission occasions,
where N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

In some embodiments, the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

In some embodiments, the obtaining unit 110 is used for:
receiving the DTU sent from a network device; and/or
determining the DTU based on a first criterion.

In some embodiments, the obtaining unit 110 is further used for receiving transmission occasion configuration information corresponding to a CG period sent from a network device;
and
the determining unit 120 is further used for determining the N transmission occasions based on the transmission occasion configuration information.

In some embodiments, the transmission occasion configuration information includes one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

In some embodiments, the determining unit 120 is used for:
obtaining a transmission parameter set of the DTU; and
determining the target DTU set based on the transmission parameter set of the DTU, the DTU, and the N transmission occasions.

In some embodiments, the determining unit 120 is used for:
starting from a first specified position and according to the DTU, determining, based on the N transmission occasions, a candidate DTU set; and
determining the target DTU set based on the transmission parameter set of the DTU and the candidate DTU set.

In some embodiments, the first specified position is determined based on one or more of:
an indication through a downlink signaling sent from a network device or a configuration through a network device;
an agreement of a protocol;
a time gap associated with a service characteristic; or
a time position determined by the terminal device.

In some embodiments, the target DTU set is a subset or a full set of the candidate DTU set,
where in case that the target DTU set is the subset of the candidate DTU set, the candidate DTU set includes the target DTU set.

In some embodiments, the obtaining unit 110 is used for:
receiving a transmission parameter set of the DTU sent from a network device; and/or
determining a transmission parameter set of the DTU based on a second criterion.

In some embodiments, the obtaining unit 110 is used for:
receiving at least one piece of transmission parameter set configuration information sent from a network device; and determining the transmission parameter set of the DTU based on the at least one piece of transmission parameter set configuration information; and/or
determining the transmission parameter set of the DTU based on a third criterion,
where the at least one piece of transmission parameter set configuration information includes one or more of:
   at least one transmission parameter set of each DTU among the target DTU set;
   at least one transmission parameter set of each DTU within a specified duration; or
   at least one transmission parameter set of each specified DTU.

In some embodiments, the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

In some embodiments, the first criterion, the second criterion or the third criterion is any of:
a criterion configured or indicated through the network device;
a criterion agreed by a protocol;
information associated with a preset service characteristic;
channel state information; or
a criterion for implementation of the terminal device.

In some embodiments, the transmission parameter set further includes a common transmission parameter set and/or a dedicated transmission parameter set,
where the common transmission parameter set includes a common transmission parameter set of all DTUs within the one CG period; and
the dedicated transmission parameter set includes one or more of:
   a dedicated transmission parameter set of a DTU within a first duration within the one CG period; or
   a dedicated transmission parameter set of a second DTU within the one CG period.

In some embodiments, the N transmission occasions are one or more of:
N adjacent uplink slots;
N adjacent uplink symbol sets;
N uplink slots within a specified duration;
N uplink symbol sets within a specified slot;
N uplink slots at a specified slot position; or
N uplink symbol sets at a specified symbol position.

In some embodiments, the N transmission occasions satisfy one or more of:
the N transmission occasions are located at a same symbol position in N slots;
the N transmission occasions occupy a same number of symbols in N slots;
symbol positions of different transmission occasions among the N transmission occasions are independent of each other, and/or each transmission occasion among the N transmission occasions does not cross a slot;
symbol positions of different transmission occasions among the N transmission occasions are independent of each other, and/or at least one transmission occasion among the N transmission occasions crosses a slot;
different transmission occasions among the N transmission occasions have a preset gap within a same slot, where the preset gap is greater than or equal to 0 symbol; or
slots where different transmission occasions among the N transmission occasions are located have a preset gap, where the preset gap is greater than or equal to 0 slot.

In some embodiments, the apparatus further includes a sending unit 140,
where the sending unit 140 is used for sending an uplink signaling to a network device, where the uplink signaling includes information associated with the target DTU set.

In some embodiments, the uplink signaling is one or more of:
an uplink physical layer signaling;
a media access control (MAC) layer signaling; or
a radio resource control (RRC) layer signaling.

In some embodiments, the uplink physical layer signaling is configured grant uplink control information (CG-UCI) or uplink control information (UCI).

The apparatus for data transmission provided by the embodiment of the present application may implement all steps of the method for data transmission implemented by the method embodiment on the above-mentioned terminal device side, and may achieve the same effect. The parts and beneficial effects of this embodiment that are the same as the method embodiment would not be described in detail here.

FIG. 12 is a second schematic structural diagram of an apparatus for data transmission according to an embodiment of the present application. The apparatus for data transmission 12 shown in FIG. 12 is applied to a network device. As shown in FIG. 12, the apparatus for data transmission 12 includes:
a sending unit 210, used for sending a data transmission unit (DTU) to a terminal device, where the DTU is time domain resource granularity for a single transmission of one data transmission block; and
a receiving unit 220, used for receiving data transmitted from the terminal device based on a target DTU set, where the data includes at least one data transmission block.

In some embodiments, the DTU includes one or more of:
N1 transmission occasions; or
M symbols within N2 transmission occasions,
where N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

In some embodiments, the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

In some embodiments, the sending unit 210 is further used for:
sending transmission occasion configuration information corresponding to a CG period to the terminal device.

In some embodiments, the transmission occasion configuration information includes one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

In some embodiments, the sending unit 210 is further used for:
sending a transmission parameter set of the DTU to the terminal device.

In some embodiments, the transmission parameter set of the DTU includes a common transmission parameter set and/or a dedicated transmission parameter set,
where the common transmission parameter set is a common transmission parameter set of all DTUs within the one CG period; and
the dedicated transmission parameter set is one or more of:
   a dedicated transmission parameter set of a DTU within a specified duration within the one CG period; or
   a dedicated transmission parameter set of a specified DTU within the one CG period.

In some embodiments, the sending unit 210 is further used for:
sending at least one piece of transmission parameter set configuration information to the terminal device.

In some embodiments, the at least one piece of transmission parameter set configuration information includes one or more of:
at least one transmission parameter set of each DTU among the target DTU set;
at least one transmission parameter set of each DTU within a specified duration; or
at least one transmission parameter set of each specified DTU.

In some embodiments, the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

In some embodiments, the receiving unit 220 is further used for:
receiving an uplink signaling sent from the terminal device, where the uplink signaling includes information associated with the target DTU set.

In some embodiments, the uplink signaling is one or more of:
an uplink physical layer signaling;
a media access control (MAC) layer signaling; or
a radio resource control (RRC) layer signaling.

In some embodiments, the uplink physical layer signaling is configured grant uplink control information (CG-UCI) or uplink control information (UCI).

In some embodiments, the receiving unit 220 is used for:
receiving, based on the uplink signaling, the data transmitted from the terminal device based on the target DTU set.

The apparatus for data transmission provided by the embodiment of the present application may implement all steps of the method for data transmission implemented by the method embodiment on the above-mentioned network device side, and may achieve the same effect. The parts and beneficial effects of this embodiment that are the same as the method embodiment would not be described in detail here.

It should be noted that, the division of units (or a unit) in the embodiments of the present application is schematic, and is only a logical function division, and there may be other division manners in actual implementation. In addition, functional units (or a functional unit) in the various embodiments of the present application may be integrated into one processing unit (or processing units), or each unit (or units) may exist alone physically, or two or more units (or a unit) may be integrated into one unit (or units). The above-mentioned integrated unit (or units) may be implemented in the form of hardware or software functional unit (or units).

If the integrated unit (or units) is implemented in the form of a software functional unit (or units) and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

An embodiment of the present application further provides a processor-readable storage medium, where the processor-readable storage medium stores a computer program, and the computer program is used for causing a processor to perform the methods provided by the above embodiments.

The computer-readable storage medium may be any available medium or data storage device that may be accessed by a computer, including but not limited to magnetic storage (such as floppy disks, hard disks, magnetic tapes, magneto-optical disks (MO), etc.), optical storage (such as CD, DVD, BD, HVD, etc.), and semiconductor storage (such as ROM, EPROM, EEPROM, non-volatile memory (NAND FLASH), solid-state drive (SSD)), etc.

As will be appreciated by those skilled in the art, embodiments of the present application may be provided as a method, a system, or a computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. Each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It would be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for data transmission, performed by a terminal device, comprising:
obtaining a data transmission unit, DTU, wherein the DTU is time domain resource granularity for a single transmission of one data transmission block;
determining, based on the DTU and N transmission occasions within one configured grant, CG, period, a target DTU set for transmitting data, wherein at least one DTU among the target DTU set is located within one CG period, and N is an integer greater than or equal to 1; and
transmitting the data based on the target DTU set, wherein the data comprises at least one data transmission block.

2. The method of claim 1, wherein the DTU comprises one or more of:
N1 transmission occasions; or
M symbols within N2 transmission occasions,
wherein N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

3. The method of claim 2, wherein the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

4. The method of claim 1, wherein obtaining the DTU comprises:
receiving the DTU sent from a network device; and/or
determining the DTU based on a first criterion.

5. The method of claim 1, further comprising:
receiving transmission occasion configuration information corresponding to a CG period sent from a network device, and determining the N transmission occasions based on the transmission occasion configuration information.

6. The method of claim 5, wherein the transmission occasion configuration information comprises one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

7. The method of any of claims 1 to 6, wherein determining, based on the DTU and the N transmission occasions within one CG period, the target DTU set for transmitting the data further comprises:
obtaining a transmission parameter set of the DTU; and
determining the target DTU set based on the transmission parameter set of the DTU, the DTU, and the N transmission occasions.

8. The method of claim 7, wherein determining the target DTU set based on the transmission parameter set of the DTU, the DTU, and the N transmission occasions comprises:
starting from a first specified position and according to the DTU, determining, based on the N transmission occasions, a candidate DTU set; and
determining the target DTU set based on the transmission parameter set of the DTU and the candidate DTU set.

9. The method of claim 8, wherein the first specified position is determined based on one or more of:
an indication through a downlink signaling sent from a network device or a configuration through a network device;
an agreement of a protocol;
a time gap associated with a service characteristic; or
a time position determined by the terminal device.

10. The method of claim 8, wherein the target DTU set is a subset or a full set of the candidate DTU set,
wherein in case that the target DTU set is the subset of the candidate DTU set, the candidate DTU set comprises the target DTU set.

11. The method of claim 7, wherein obtaining the transmission parameter set of the DTU comprises:
receiving a transmission parameter set of the DTU sent from a network device; and/or
determining a transmission parameter set of the DTU based on a second criterion.

12. The method of claim 7 or 8, wherein obtaining the transmission parameter set of the DTU comprises:
receiving at least one piece of transmission parameter set configuration information sent from a network device; and determining the transmission parameter set of the DTU based on the at least one piece of transmission parameter set configuration information; and/or
determining the transmission parameter set of the DTU based on a third criterion,
wherein the at least one piece of transmission parameter set configuration information comprises one or more of:
at least one transmission parameter set of each DTU among the target DTU set;
at least one transmission parameter set of each DTU within a specified duration; or
at least one transmission parameter set of each specified DTU.

13. The method of claim 7, wherein the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

14. The method of claim 4 or 11 or 12, wherein the first criterion, the second criterion or the third criterion is any of:
a criterion configured or indicated through the network device;
a criterion agreed by a protocol;
information associated with a preset service characteristic;
channel state information; or
a criterion for implementation of the terminal device.

15. The method of claim 7, wherein the transmission parameter set further comprises a common transmission parameter set and/or a dedicated transmission parameter set,
wherein the common transmission parameter set comprises a common transmission parameter set of all DTUs within the one CG period; and
the dedicated transmission parameter set comprises one or more of:
a dedicated transmission parameter set of a DTU within a first duration within the one CG period; or
a dedicated transmission parameter set of a second DTU within the one CG period.

16. The method of any of claims 1 to 15, wherein the N transmission occasions are one or more of:
N adjacent uplink slots;
N adjacent uplink symbol sets;
N uplink slots within a specified duration;
N uplink symbol sets within a specified slot;
N uplink slots at a specified slot position; or
N uplink symbol sets at a specified symbol position.

17. The method of any of claims 1 to 16, wherein the N transmission occasions satisfy one or more of:
the N transmission occasions are located at a same symbol position in N slots;
the N transmission occasions occupy a same number of symbols in N slots;
symbol positions of different transmission occasions among the N transmission occasions are independent of each other, and/or each transmission occasion among the N transmission occasions does not cross a slot;
symbol positions of different transmission occasions among the N transmission occasions are independent of each other, and/or at least one transmission occasion among the N transmission occasions crosses a slot;
different transmission occasions among the N transmission occasions have a preset gap within a same slot, wherein the preset gap is greater than or equal to 0 symbol; or
slots where different transmission occasions among the N transmission occasions are located have a preset gap, wherein the preset gap is greater than or equal to 0 slot.

18. The method of any of claims 1 to 17, further comprising:
sending an uplink signaling to a network device, wherein the uplink signaling comprises information associated with the target DTU set.

19. The method of claim 18, wherein the uplink signaling is one or more of:
an uplink physical layer signaling;
a media access control, MAC, layer signaling; or
a radio resource control, RRC, layer signaling.

20. The method of claim 19, wherein the uplink physical layer signaling is configured grant uplink control information, CG-UCI, or uplink control information, UCI.

21. A method for data transmission, performed by a network device, comprising:
sending a data transmission unit, DTU, to a terminal device, wherein the DTU is time domain resource granularity for a single transmission of one data transmission block; and
receiving data transmitted from the terminal device based on a target DTU set, wherein the data comprises at least one data transmission block,
wherein the target DTU set is determined based on the DTU and N transmission occasions within one configured grant, CG, period, at least one DTU among the target DTU set is located within one CG period, and N is an integer greater than or equal to 1.

22. The method of claim 21, wherein the DTU comprises one or more of:
N1 transmission occasions; or
M symbols within N2 transmission occasions,
wherein N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

23. The method of claim 22, wherein the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

24. The method of claim 21, further comprising:
sending transmission occasion configuration information corresponding to a CG period to the terminal device.

25. The method of claim 24, wherein the transmission occasion configuration information comprises one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

26. The method of claim 21 or 24, further comprising:
sending a transmission parameter set of the DTU to the terminal device.

27. The method of claim 26, wherein the transmission parameter set of the DTU comprises a common transmission parameter set and/or a dedicated transmission parameter set,
wherein the common transmission parameter set is a common transmission parameter set of all DTUs within the one CG period; and
the dedicated transmission parameter set is one or more of:
a dedicated transmission parameter set of a DTU within a specified duration within the one CG period; or
a dedicated transmission parameter set of a specified DTU within the one CG period.

28. The method of claim 21 or 24, further comprising:
sending at least one piece of transmission parameter set configuration information to the terminal device.

29. The method of claim 28, wherein the at least one piece of transmission parameter set configuration information comprises one or more of:
at least one transmission parameter set of each DTU among the target DTU set;
at least one transmission parameter set of each DTU within a specified duration; or
at least one transmission parameter set of each specified DTU.

30. The method of claim 21, wherein the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

31. The method of claim 29, further comprising:
receiving an uplink signaling sent from the terminal device, wherein the uplink signaling comprises information associated with the target DTU set.

32. The method of claim 31, wherein the uplink signaling is one or more of:
an uplink physical layer signaling;
a media access control, MAC, layer signaling; or
a radio resource control, RRC, layer signaling.

33. The method of claim 32, wherein the uplink physical layer signaling is configured grant uplink control information, CG-UCI, or uplink control information, UCI.

34. The method of claim 33, wherein receiving the data transmitted from the terminal device based on the target DTU set comprises:
receiving, based on the uplink signaling, the data transmitted from the terminal device based on the target DTU set.

35. A terminal device, comprising: a memory, a transceiver and a processor,
wherein the memory is used for storing a computer program;
the transceiver is used for receiving and sending data under control of the processor; and
the processor is used for reading the computer program in the memory and performing the following operations:
obtaining a data transmission unit, DTU, wherein the DTU is time domain resource granularity for a single transmission of one data transmission block;
determining, based on the DTU and N transmission occasions within one configured grant, CG, period, a target DTU set for transmitting data, wherein at least one DTU among the target DTU set is located within one CG period, and N is an integer greater than or equal to 1; and
transmitting the data based on the target DTU set, wherein the data comprises at least one data transmission block.

36. The terminal device of claim 35, wherein the DTU comprises one or more of:
N1 transmission occasions; or
M symbols within N2 transmission occasions,
wherein N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

37. The terminal device of claim 36, wherein the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

38. The terminal device of claim 35, wherein obtaining the DTU comprises:
receiving the DTU sent from a network device; and/or
determining the DTU based on a first criterion.

39. The terminal device of claim 5, wherein the processor is further used for performing the following operation:
receiving transmission occasion configuration information corresponding to a CG period sent from a network device, and determining the N transmission occasions based on the transmission occasion configuration information.

40. The terminal device of claim 39, wherein the transmission occasion configuration information comprises one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

41. The terminal device of any of claims 35 to 40, wherein determining, based on the DTU and the N transmission occasions within one CG period, the target DTU set for transmitting the data further comprises:
obtaining a transmission parameter set of the DTU; and
determining the target DTU set based on the transmission parameter set of the DTU, the DTU, and the N transmission occasions.

42. The terminal device of claim 41, wherein determining the target DTU set based on the transmission parameter set of the DTU, the DTU, and the N transmission occasions comprises:
starting from a first specified position and according to the DTU, determining, based on the N transmission occasions, a candidate DTU set; and
determining the target DTU set based on the transmission parameter set of the DTU and the candidate DTU set.

43. The terminal device of claim 42, wherein the first specified position is determined based on one or more of:
an indication through a downlink signaling sent from a network device or a configuration through a network device;
an agreement of a protocol;
a time gap associated with a service characteristic; or
a time position determined by the terminal device.

44. The terminal device of claim 42, wherein the target DTU set is a subset or a full set of the candidate DTU set,
wherein in case that the target DTU set is the subset of the candidate DTU set, the candidate DTU set comprises the target DTU set.

45. The terminal device of claim 41, wherein obtaining the transmission parameter set of the DTU comprises:
receiving a transmission parameter set of the DTU sent from a network device; and/or
determining a transmission parameter set of the DTU based on a second criterion.

46. The terminal device of claim 41 or 42, wherein obtaining the transmission parameter set of the DTU comprises:
receiving at least one piece of transmission parameter set configuration information sent from a network device; and determining the transmission parameter set of the DTU based on the at least one piece of transmission parameter set configuration information; and/or
determining the transmission parameter set of the DTU based on a third criterion,
wherein the at least one piece of transmission parameter set configuration information comprises one or more of:
at least one transmission parameter set of each DTU among the target DTU set;
at least one transmission parameter set of each DTU within a specified duration; or
at least one transmission parameter set of each specified DTU.

47. The terminal device of claim 41, wherein the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

48. The terminal device of claim 38, 45 or 46, wherein the first criterion, the second criterion or the third criterion is any of:
a criterion configured or indicated through the network device;
a criterion agreed by a protocol;
information associated with a preset service characteristic;
channel state information; or
a criterion for implementation of the terminal device.

49. The terminal device of claim 41, wherein the transmission parameter set further comprises a common transmission parameter set and/or a dedicated transmission parameter set,
wherein the common transmission parameter set comprises a common transmission parameter set of all DTUs within the one CG period; and
the dedicated transmission parameter set comprises one or more of:
a dedicated transmission parameter set of a DTU within a first duration within the one CG period; or
a dedicated transmission parameter set of a second DTU within the one CG period.

50. The terminal device of any of claims 35 to 49, wherein the N transmission occasions are one or more of:
N adjacent uplink slots;
N adjacent uplink symbol sets;
N uplink slots within a specified duration;
N uplink symbol sets within a specified slot;
N uplink slots at a specified slot position; or
N uplink symbol sets at a specified symbol position.

51. The terminal device of any of claims 35 to 50, wherein the N transmission occasions satisfy one or more of:
the N transmission occasions are located at a same symbol position in N slots;
the N transmission occasions occupy a same number of symbols in N slots;
symbol positions of different transmission occasions among the N transmission occasions are independent of each other, and/or each transmission occasion among the N transmission occasions does not cross a slot;
symbol positions of different transmission occasions among the N transmission occasions are independent of each other, and/or at least one transmission occasion among the N transmission occasions crosses a slot;
different transmission occasions among the N transmission occasions have a preset gap within a same slot, wherein the preset gap is greater than or equal to 0 symbol; or
slots where different transmission occasions among the N transmission occasions are located have a preset gap, wherein the preset gap is greater than or equal to 0 slot.

52. The terminal device of any of claims 35 to 51, wherein the processor is further used for performing the following operation:
sending an uplink signaling to a network device, wherein the uplink signaling comprises information associated with the target DTU set.

53. The terminal device of claim 52, wherein the uplink signaling is one or more of:
an uplink physical layer signaling;
a media access control, MAC, layer signaling; or
a radio resource control, RRC, layer signaling.

54. The terminal device of claim 53, wherein the uplink physical layer signaling is configured grant uplink control information, CG-UCI, or uplink control information, UCI.

55. A network device, comprising: a memory, a transceiver, and a processor,
wherein the memory is used for storing a computer program;
the transceiver is used for receiving and sending data under control of the processor; and
the processor is used for reading the computer program in the memory and performing the following operations:
sending a data transmission unit, DTU, to a terminal device, wherein the DTU is time domain resource granularity for a single transmission of one data transmission block; and
receiving data transmitted from the terminal device based on a target DTU set, wherein the data comprises at least one data transmission block,
wherein the target DTU set is determined based on the DTU and N transmission occasions within one configured grant, CG, period, at least one DTU among the target DTU set is located within one CG period, and N is an integer greater than or equal to 1.

56. The network device of claim 55, wherein the DTU comprises one or more of:
N1 transmission occasions; or
M symbols within N2 transmission occasions,
wherein N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

57. The network device of claim 56, wherein the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

58. The network device of claim 55, wherein the processor is further used for performing the following operation:
sending transmission occasion configuration information corresponding to a CG period to the terminal device.

59. The network device of claim 58, wherein the transmission occasion configuration information comprises one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

60. The network device of claim 57 or 58, wherein the processor is further used for performing the following operation:
sending a transmission parameter set of the DTU to the terminal device.

61. The network device of claim 60, wherein the transmission parameter set of the DTU comprises a common transmission parameter set and/or a dedicated transmission parameter set,
wherein the common transmission parameter set is a common transmission parameter set of all DTUs within the one CG period; and
the dedicated transmission parameter set is one or more of:
a dedicated transmission parameter set of a DTU within a specified duration within the one CG period; or
a dedicated transmission parameter set of a specified DTU within the one CG period.

62. The network device of claim 55 or 58, wherein the processor is further used for performing the following operation:
sending at least one piece of transmission parameter set configuration information to the terminal device.

63. The network device of claim 62, wherein the at least one piece of transmission parameter set configuration information comprises one or more of:
at least one transmission parameter set of each DTU among the target DTU set;
at least one transmission parameter set of each DTU within a specified duration; or
at least one transmission parameter set of each specified DTU.

64. The network device of claim 55, wherein the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

65. The network device of claim 55, wherein the processor is further used for performing the following operation:
receiving an uplink signaling sent from the terminal device, wherein the uplink signaling comprises information associated with the target DTU set.

66. The network device of claim 65, wherein the uplink signaling is one or more of:
an uplink physical layer signaling;
a media access control, MAC, layer signaling; or
a radio resource control, RRC, layer signaling.

67. The network device of claim 66, wherein the uplink physical layer signaling is configured grant uplink control information, CG-UCI, or uplink control information, UCI.

68. The network device of claim 59, wherein receiving the data transmitted from the terminal device based on the target DTU set comprises:
receiving, based on the uplink signaling, the data transmitted from the terminal device based on the target DTU set.

69. An apparatus for data transmission, for use in a terminal device, comprising:
an obtaining unit, used for obtaining a data transmission unit, DTU, wherein the DTU is time domain resource granularity for a single transmission of one data transmission block;
a determining unit, used for determining, based on the DTU and N transmission occasions within one configured grant, CG, period, a target DTU set for transmitting data, wherein at least one DTU among the target DTU set is located within one CG period, and N is an integer greater than or equal to 1; and
a transmitting unit, used for transmitting the data based on the target DTU set, wherein the data comprises at least one data transmission block.

70. The apparatus of claim 69, wherein the DTU comprises one or more of:
N1 transmission occasions; or
M symbols within N2 transmission occasions,
wherein N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

71. The apparatus of claim 70, wherein the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

72. The apparatus of claim 69, wherein the obtaining unit is used for:
receiving the DTU sent from a network device; and/or
determining the DTU based on a first criterion.

73. The apparatus of claim 69, wherein the obtaining unit is used for receiving transmission occasion configuration information corresponding to a CG period sent from a network device;
and
the determining unit is further used for determining the N transmission occasions based on the transmission occasion configuration information.

74. The apparatus of claim 73, wherein the transmission occasion configuration information comprises one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

75. The apparatus of any of claims 69 to 74, wherein the determining unit is used for:
obtaining a transmission parameter set of the DTU; and
determining the target DTU set based on the transmission parameter set of the DTU, the DTU, and the N transmission occasions.

76. The apparatus of claim 75, wherein the determining unit is used for:
starting from a first specified position and according to the DTU, determining, based on the N transmission occasions, a candidate DTU set; and
determining the target DTU set based on the transmission parameter set of the DTU and the candidate DTU set.

77. The apparatus of claim 76, wherein the first specified position is determined based on one or more of:
an indication through a downlink signaling sent from a network device or a configuration through a network device;
an agreement of a protocol;
a time gap associated with a service characteristic; or
a time position determined by the terminal device.

78. The apparatus of claim 76, wherein the target DTU set is a subset or a full set of the candidate DTU set,
wherein in case that the target DTU set is the subset of the candidate DTU set, the candidate DTU set comprises the target DTU set.

79. The apparatus of claim 75, wherein the obtaining unit is used for:
receiving a transmission parameter set of the DTU sent from a network device; and/or
determining a transmission parameter set of the DTU based on a second criterion.

80. The apparatus of claim 75 or 76, wherein the obtaining unit is used for:
receiving at least one piece of transmission parameter set configuration information sent from a network device; and determining the transmission parameter set of the DTU based on the at least one piece of transmission parameter set configuration information; and/or
determining the transmission parameter set of the DTU based on a third criterion,
wherein the at least one piece of transmission parameter set configuration information comprises one or more of:
at least one transmission parameter set of each DTU among the target DTU set;
at least one transmission parameter set of each DTU within a specified duration; or
at least one transmission parameter set of each specified DTU.

81. The apparatus of claim 75, wherein the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

82. The apparatus of claim 72, 79 or 80, wherein the first criterion, the second criterion or the third criterion is any of:
a criterion configured or indicated through the network device;
a criterion agreed by a protocol;
information associated with a preset service characteristic;
channel state information; or
a criterion for implementation of the terminal device.

83. The apparatus of claim 75, wherein the transmission parameter set further comprises a common transmission parameter set and/or a dedicated transmission parameter set,
wherein the common transmission parameter set comprises a common transmission parameter set of all DTUs within the one CG period; and
the dedicated transmission parameter set comprises one or more of:
a dedicated transmission parameter set of a DTU within a first duration within the one CG period; or
a dedicated transmission parameter set of a second DTU within the one CG period.

84. The apparatus of any of claims 69 to 83, wherein the N transmission occasions are one or more of:
N adjacent uplink slots;
N adjacent uplink symbol sets;
N uplink slots within a specified duration;
N uplink symbol sets within a specified slot;
N uplink slots at a specified slot position; or
N uplink symbol sets at a specified symbol position.

85. The apparatus of any of claims 69 to 84, wherein the N transmission occasions satisfy one or more of:
the N transmission occasions are located at a same symbol position in N slots;
the N transmission occasions occupy a same number of symbols in N slots;
symbol positions of different transmission occasions among the N transmission occasions are independent of each other, and/or each transmission occasion among the N transmission occasions does not cross a slot;
symbol positions of different transmission occasions among the N transmission occasions are independent of each other, and/or at least one transmission occasion among the N transmission occasions crosses a slot;
different transmission occasions among the N transmission occasions have a preset gap within a same slot, wherein the preset gap is greater than or equal to 0 symbol; or
slots where different transmission occasions among the N transmission occasions are located have a preset gap, wherein the preset gap is greater than or equal to 0 slot.

86. The apparatus of any of claims 69 to 85, further comprising a sending unit,
wherein the sending unit is used for sending an uplink signaling to a network device, wherein the uplink signaling comprises information associated with the target DTU set.

87. The apparatus of claim 86, wherein the uplink signaling is one or more of:
an uplink physical layer signaling;
a media access control, MAC, layer signaling; or
a radio resource control, RRC, layer signaling.

88. The apparatus of claim 87, wherein the uplink physical layer signaling is configured grant uplink control information, CG-UCI, or uplink control information, UCI.

89. An apparatus for data transmission, for use in a network device, comprising:
a sending unit, used for sending a data transmission unit, DTU, to a terminal device, wherein the DTU is time domain resource granularity for a single transmission of one data transmission block; and
a receiving unit, used for receiving data transmitted from the terminal device based on a target DTU set, wherein the data comprises at least one data transmission block,
wherein the target DTU set is determined based on the DTU and N transmission occasions within one configured grant, CG, period, at least one DTU among the target DTU set is located within one CG period, and N is an integer greater than or equal to 1.

90. The apparatus of claim 89, wherein the DTU comprises one or more of:
N1 transmission occasions; or
M symbols within N2 transmission occasions,
wherein N1, N2 and M are all integers greater than or equal to 1, and the N1 transmission occasions and/or the N2 transmission occasions are part of the N transmission occasions, or the N1 transmission occasions and/or the N2 transmission occasions are all of the N transmission occasions.

91. The apparatus of claim 90, wherein the M symbols are one or more of:
M adjacent symbols within one transmission occasion;
symbols at M specified positions within one transmission occasion;
M symbols within different transmission occasions;
M adjacent symbols across a transmission occasion; or
symbols at M specified positions across a transmission occasion.

92. The apparatus of claim 89, wherein the sending unit is further used for:
sending transmission occasion configuration information corresponding to a CG period to the terminal device.

93. The apparatus of claim 92, wherein the transmission occasion configuration information comprises one or more of:
a number N of transmission occasions within one CG period;
a period of a transmission occasion;
an offset value of a transmission occasion;
a total number of slots occupied by the N transmission occasions;
a total number of symbols occupied by the N transmission occasions;
a number of slots occupied by at least one transmission occasion;
a number of symbols occupied by at least one transmission occasion;
a slot pattern of at least one transmission occasion;
a symbol pattern of at least one transmission occasion within a slot;
granularity of division for at least one transmission occasion;
minimum granularity of division for at least one transmission occasion;
maximum granularity of division for at least one transmission occasion;
a time gap between at least one transmission occasion; or
a resource mapping type of at least one transmission occasion.

94. The apparatus of claim 89 or 92, wherein the sending unit is further used for:
sending a transmission parameter set of the DTU to the terminal device.

95. The apparatus of claim 94, wherein the transmission parameter set of the DTU comprises a common transmission parameter set and/or a dedicated transmission parameter set,
wherein the common transmission parameter set is a common transmission parameter set of all DTUs within the one CG period; and
the dedicated transmission parameter set is one or more of:
a dedicated transmission parameter set of a DTU within a specified duration within the one CG period; or
a dedicated transmission parameter set of a specified DTU within the one CG period.

96. The apparatus of claim 89 or 92, wherein the sending unit is further used for:
sending at least one piece of transmission parameter set configuration information to the terminal device.

97. The apparatus of claim 96, wherein the at least one piece of transmission parameter set configuration information comprises one or more of:
at least one transmission parameter set of each DTU among the target DTU set;
at least one transmission parameter set of each DTU within a specified duration; or
at least one transmission parameter set of each specified DTU.

98. The apparatus of claim 89, wherein the transmission parameter set of at least one DTU among the target DTU set satisfies at least one of:
transmission parameter sets of each DTU are independent of each other;
transmission parameter sets of each DTU within a specified duration are independent of each other;
transmission parameter sets of at least two specified DTUs are independent of each other;
transmission parameter sets of specified DTUs are the same;
transmission parameter sets of each DTU within a specified duration are the same; or
transmission parameter sets of at least two specified DTUs are the same.

99. The apparatus of claim 97, wherein the receiving unit is further used for:
receiving an uplink signaling sent from the terminal device, wherein the uplink signaling comprises information associated with the target DTU set.

100. The apparatus of claim 99, wherein the uplink signaling is one or more of:
an uplink physical layer signaling;
a media access control, MAC, layer signaling; or
a radio resource control, RRC, layer signaling.

101. The apparatus of claim 100, wherein the uplink physical layer signaling is configured grant uplink control information, CG-UCI, or uplink control information, UCI.

102. The apparatus of claim 101, wherein the receiving unit is used for:
receiving, based on the uplink signaling, the data transmitted from the terminal device based on the target DTU set.

103. A processor-readable storage medium, wherein the processor-readable storage medium stores a computer program, and the computer program is used to cause a processor to perform the method of any of claims 1 to 34.
